# EUROPEAN PATENT SPECIFICATION

(11) **EP 3 469 584 B1**
(45) Date of publication and mention of the grant of the patent: **19.04.2023**
(21) Application number: 17813908.5
(22) Date of filing: 13.06.2017
(51) Int. Cl.: G10L 21/0272, G06N 3/02, G06F 3/01, G06F 3/16, G06N 3/04, G06N 3/08, G10L 25/30, G10L 21/0208, H04R 3/00

(54) **NEURAL DECODING OF ATTENTIONAL SELECTION IN MULTI-SPEAKER ENVIRONMENTS**
NEURONALE DECODIERUNG VON AUFMERKSAMKEITSAUSWAHL IN UMGEBUNGEN MIT MEHREREN SPRECHERN
DÉCODAGE NEURONAL DE SÉLECTION D'ATTENTION DANS DES ENVIRONNEMENTS À HAUT-PARLEURS MULTIPLES

(30) Priority: 14.06.2016 US 201662349976 P; 02.12.2016 US 201662429549 P; 31.03.2017 US 201762480005 P
(43) Date of publication of application: 17.04.2019
(73) Proprietor: The Trustees of Columbia University in the City of New York, New York, NY 10027 (US)
(72) Inventor: MESGARANI, Nima, New York New York 10027 (US); O'SULLIVAN, James, New York New York 10027 (US); CHEN, Zhuo, New York New York 10027 (US); LUO, Yi, Long Island City, NY 11101 (US)
(74) Representative: Slingsby Partners LLP
(86) International application number: PCT/US2017/037186
(87) International publication number: WO 2017/218492

(56) References cited:
- US-A- 5 150 323
- US-A1- 2001 018 652
- US-A1- 2007 083 365
- US-A1- 2009 116 652
- US-A1- 2009 279 715
- US-A1- 2015 269 933
- SIMON VAN EYNDHOVEN ET AL: "EEG-informed attended speaker extraction from recorded speech mixtures with application in neuro-steered hearing prostheses", ARXIV.ORG, CORNELL UNIVERSITY LIBRARY, 201 OLIN LIBRARY CORNELL UNIVERSITY ITHACA, NY 14853, 18 February 2016 (2016-02-18), XP081359923, DOI: 10.1109/TBME.2016.2587382
- EYNDHOVEN ET AL.: 'EEG-informed attended speaker extraction from recorded speech mixtures with application in neuro-steered hearing prostheses' IEEE TRANS. BIOMEDICAL ENGINEERING, [Online] vol. 64, no. 5, 18 February 2016, pages 1045 - 1056, XP011646202 Retrieved from the Internet: <URL:https://arxlv.org/abs/1602.05702> [retrieved on 2017-08-25]

## Description

### CROSS-REFERENCE TO RELATED APPLICATIONS

This application claims the benefit of, and priority to, U.S. Provisional Patent Application Serial Nos. 62/480,005, entitled "DEEP ATTRACTOR NETWORK FOR SINGLE CHANNEL SPEECH SEPARATION" and filed March 31, 2017, 62/429,549, entitled "NEURAL DECODING OF ATTENTIONAL SELECTION IN MULTI-SPEAKER ENVIRONMENTS WITHOUT ACCESS TO SEPARATED SOURCES" and filed December 2, 2016, and 62/349,976, entitled "NEURAL DECODING OF ATTENTIONAL SELECTION IN MULTI-SPEAKER ENVIRONMENTS WITHOUT ACCESS TO SEPARATED SOURCES" and filed June 14, 2016.

### BACKGROUND

In a natural auditory environment, most people can generally attend to (i.e., focus on) a particular speaker out of many. However, this task is challenging for persons suffering from peripheral and central auditory pathway disorders.

### SUMMARY

In some variations, a method according to independent claim 1 is provided.

Embodiments of the method may include at least some of the features described in the present disclosure, including one or more of the following features.

The method may further include generating a sound spectrogram from the combined sound signal, and applying the neural-network-based speech-separation processing to the generated spectrogram to derive multiple resultant speaker spectrograms.

Selecting the one of the plurality of separated sound signals based on the obtained neural signals for the person may include generating an attended speaker spectrogram based on the neural signals for the person, comparing the attended speaker spectrogram to the derived multiple resultant speaker spectrograms to select one of the multiple resultant speaker spectrograms, and transforming the selected one of the multiple resultant speaker spectrograms into an acoustic signal.

Comparing the attended-speaker spectrogram to the derived multiple resultant speaker spectrograms may include comparing the attended speaker spectrogram to the derived multiple resultant speaker spectrograms using normalized correlation analysis.

Obtaining the neural signals for the person may include obtaining one or more of, for example, electrocorticography (ECoG) signals for the person, neural measurements via a non-invasive scalp, and/or in-ear EEG recordings.

Applying the neural-network-based speech-separation processing to the combined sound signal from the multiple sound sources may include providing the combined sound signal from the multiple sound sources to a deep neural network (DNN) configured to identify individual sound sources from the combined sound signal.

Processing the selected one of the plurality of separated sound signals may include one or more of, for example, amplifying the selected one of the plurality of separated signals, and/or attenuating at least one non-selected signal from the plurality of separated signals.

Obtaining the combined sound signal for the multiple sound sources may include receiving the combined sound signal for the multiple sound sources at a single microphone coupled to the device.

The combined sound signal may define a time-frequency embedding space. Applying the neural-network-based speech-separation processing to the combined sound signal may include determining respective reference points for each of the multiple sound sources, with the reference points representing locations of the sound sources in the embedding space for the combined sound signal, deriving masks for the determined reference points, and extracting at least one of the multiple sound sources using at least one of the derived masks.

Determining the respective reference points may include determining the respective reference points using a deep neural network.

Deriving the masks may include computing similarity between embedded time-frequency points within the embedding space and the determined respective reference points.

The reference points may include attractor points in the embedding space.

In some variations, a system according to independent claim 5 is provided.

In some variations, computer readable media according to independent claim 9 are provided.

Embodiments of the system and the computer-readable media may include at least some of the features described in the present disclosure, including at least some of the features described above in relation to the method. In the following, embodiments related to the deep attractor network (DANet) approach are not encompassed by the wording of the claims but are considered useful for understanding the invention.

Details of one or more implementations are set forth in the accompanying drawings and in the description below. Further features, aspects, and advantages will become apparent from the description, the drawings, and the claims.

### BRIEF DESCRIPTION OF THE DRAWINGS

These and other aspects will now be described in detail with reference to the following drawings.
FIG. 1 is a diagram of a system to process (e.g., separate) combined sound signals (e.g., for attentional selection applications).
FIG. 2 is another example implementation of a system to process (e.g., separate) sound signals.
FIG. 3 is a flowchart of an example procedure for attentional selection of a speaker in a multi-speaker environment.
FIG. 4 is a graph providing an analysis of deep neural network (DNN) output correlation.
FIG. 5 includes graphs illustrating reconstruction accuracy for neural correlation analysis.
FIG. 6A includes graphs showing the proportion of segments in which the attentional focus of subjects could be correctly determined using HF data and LF data.
FIG. 6B includes graphs presenting attention decoding index (ADI) measures per electrode.
FIG. 7 is a graph showing results of an analysis for dynamic switching of attention for an example subject.
FIGS. 8A-D are graphs showing further performance results in relation to dynamic switching of attention
FIGS. 9A-B are graphs illustrating speaker separation quality results.
FIG. 10 is a diagram of a proposed system architecture to implement a deep-attractor network (DANet) approach.
FIG. 11A includes graphs showing an example of a mixture, the difference between two speakers in the mixture, and the separated spectrograms of the two speakers using a DANet implementation.
FIG. 11B is a graph showing locations of T-F bins in an embedding space.
FIG. 12 is a graph presenting the locations of attractor points in the embedding space.
FIG. 13 is a flowchart of an example deep attractor signal separation procedure.
FIG. 14 is a schematic diagram of a generic controller system.

Like reference symbols in the various drawings indicate like elements.

### DETAILED DESCRIPTION

Described herein are systems, devices, apparatus, methods, computer program products, media, and other implementations, to process sound signals / data in environments that contain multiple sounds sources, based on neural signals / data from a person receiving the multi-source sound signals. In some embodiments, procedures to decode which speaker a person is attending to are implemented by monitoring their neural activity via both invasive and non-invasive electrophysiological recordings. In such embodiments, attention-aware brain-computer interfaces (BCIs) may be used to control smart hearable devices capable of selectively processing (e.g., amplifying) one speaker and/or suppressing other speakers in crowded environments.

In some attention decoding procedures, explicit access to the isolated sound sources in the environment may be required, which may be difficult to achieve. Techniques such as beamforming may be used in an attempt to isolate different speakers. However, these techniques may not be entirely adequate when there is little (or no) spatial separation between speakers. Also, the techniques' reliance on multiple microphones has drawbacks with regards to hardware complexity and user comfort. Thus, in implementations described herein, these challenges are addressed by using a single microphone, or by combining the beamforming techniques / methods with the proposed implementations, to implement automatic speech separation processing in which, for example, neural-network-based processing, such as deep neural network (DNN) models, are used to separate the sound sources. Generally, DNN refers to neural networks that include multiple hidden layers between the input and output layers of the networks. In DNN's that are used herein for speech separation processing, the output of the speech separation processes can be used to decode the attentional state of the listener, and subsequently, to amplify the attended source For example, in some embodiments, a speech separation procedure separates out the speakers in a crowd, and compares to a signal reconstructed from the brain. The speech separation procedure can next amplify (or otherwise filter) that speaker source compared to other sources.

Accordingly, implementations described herein include a method that comprises obtaining, by a device (e.g., a hearing device, a hearing enhancement device to allow better hearing in a very noisy environment, a noise cancellation device, a virtual reality device, and/or other types of hearing augmentation devices), a combined sound signal for sound combined from multiple sound sources in an area in which a person is located. The method further includes applying, by the device, neural-network-based speech-separation processing to the combined sound signal from the multiple sound sources to derive a plurality of separated signals that each contains signals corresponding to different groups of the multiple sound sources, and obtaining, by the device, neural signals for the person, with the neural signals being indicative of one or more of the multiple sound sources the person is attentive to. The method additionally includes selecting one of the plurality of separated signals based on the obtained neural signals for the person, and processing the selected one of the plurality of separated signals. In some embodiments, obtaining the neural signals for the person may include obtaining one or more of, for example, electrocorticography (ECoG) signals for the person, neural measurements via a non-invasive scalp, and/or in-ear EEG recordings. Applying the speech-separation processing to the combined sound signal from the multiple sound sources may include providing the combined sound signal from the multiple sound sources to a deep neural network (DNN) configured to identify individual sound sources from the multiple sound sources based on the combined sound signal. Processing the selected one of the plurality of separated sound signals may include one or more of, for example, amplifying the selected one of the plurality of separated signals, and/or attenuating at least one non-selected signal from the separated sound signals.

In some embodiments, separation processes to separate the multi-source audio / sound signals may be realized as a deep learning framework for single channel speech separation by creating attractor points in high dimensional embedding space of the acoustic signals, which pull together the time-frequency bins corresponding to each source. Attractor points are created, in some embodiments, by finding the centroids of the sources in the embedding space, which are subsequently used to determine the similarity of each bin in the mixture to each source. The network is then trained to minimize the reconstruction error of each source by optimizing the embeddings.

Thus, in embodiments of the deep attractor network approach, the combined signal may be a mixture speech signal defining a time-frequency embedding space. Applying the speech-separation processing to the combined sound signal may include, in such embodiments, determining respective reference points for each of the multiple sound sources, with the reference points representing locations of the sources in the embedding space for the mixture speech signal, deriving masks for the determined reference points, and extracting at least one of the multiple sources using at least one of the derived masks. The reference points may include attractor points in the embedding space. Determining the respective reference points may include determining the respective reference points using a deep neural network. Deriving the masks may include computing similarity between embedded time-frequency points within the embedding space and the determined respective reference points.

### Attentional Selection in Multi-Speaker Environments

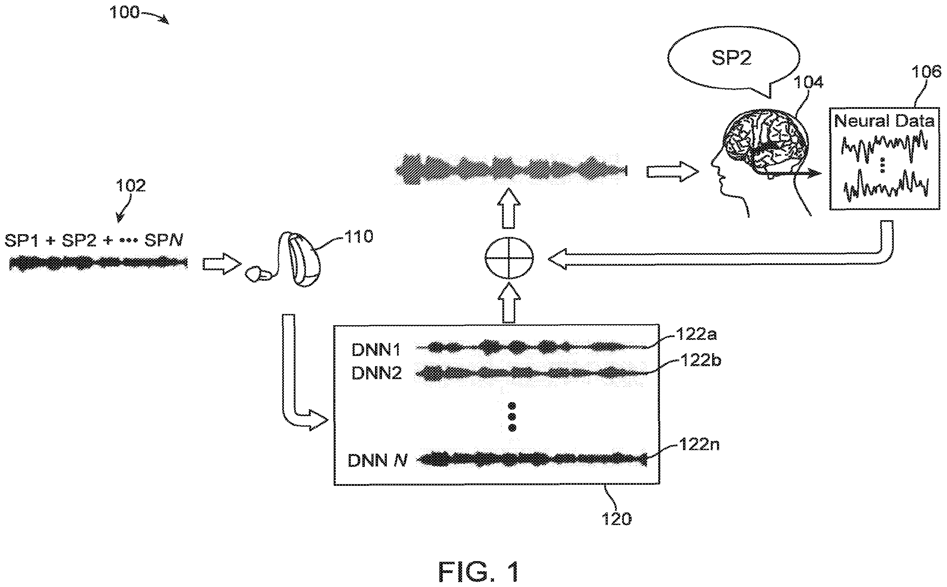

With reference now to FIG. 1, a diagram for an example system 100 to process sound signals is shown. The system 100 (which may be implemented as a hearing device to facilitate hearing for a person 104, or may be implemented as a noise cancellation device, or any other type of a hearing augmentation device) includes a microphone 110 to receive a combined sound signal 102 combining sound signals from multiple sound sources. In some embodiments, a controller (e.g., a computing-based device, which may be incorporated into the hearing device, or some other hearing augmentation device, used by the person 104) implements one or more sound-processing procedures 120 (which may each correspond to a separate DNN, although, in some embodiments, a single neural network unit may be configured to implement multiple separate DNN's) to process the combined (aggregated) sound signal 102 to separate the combined sound signal into a plurality of separate signals 122a-n (which may include sound signals, or may include signal representative and/or derived from sound signals). For example, in some embodiments, the one or more procedures 120 implemented by the system's controller may include a speech-separation process based on a deep-neural network.

The system 100 also includes one or more sensors to obtain / measure neural signals / data 106 from the person 104 that are indicative of the sound source (e.g., one of multiple speakers in the vicinity of the person 104) the person 104 is attentive to. Based on the neural signals / data obtained for the person 104, one or more of the plurality of separated signals derived by the one or more procedures 120 is selected. In the example of FIG. 1, the neural signals obtained for the person 104 may indicate that the user is attentive to the sound source SP2, and, therefore, separated sound signal 122b (corresponding to the source SP2 in FIG. 1) is selected for further processing. The selected separated sound signal can then be processed to, for example, amplify, or otherwise perform signal enhancing filtering on the signal. Additionally and/or alternatively, the non-selected signals (i.e., the signals other than the sound signal 122b) may be processed to attenuate or suppress them (or to perform some other filtering operation thereon).

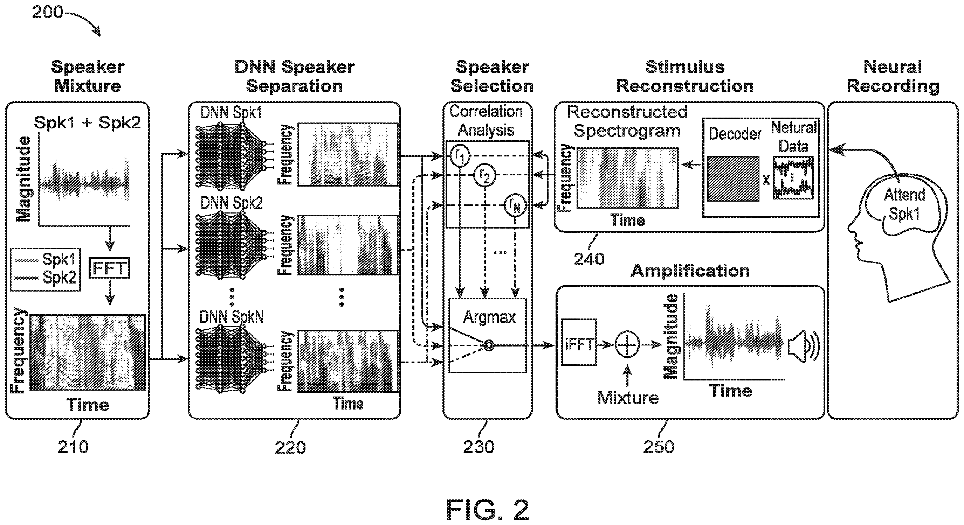

FIG. 2 depicts another example implementation of a system 200 to process (e.g., separate) sound signals (e.g., in a closed-loop). As shown, two speakers, namely, Spk1 and Spk2, are mixed together, as illustrated in a first stage 210 of the system 200. In some embodiments, the first stage 210 includes various signal recording and pre-processing operations performed on acquired audio signals. In example implementations that were realized and evaluated, as will be more particularly described below, some source speakers were recorded using Tucker Davis Technologies (TDT^{®}) hardware and sampled at 2441Hz, while other source speakers were recorded using Xltek^{®} hardware and sampled at 500Hz. Further processing operations were performed offline. In the implementations that were realized and tested herein, filters were realized using Matlab's^{®} Filter Design Toolbox, and were used in both a forwards and backwards direction to remove phase distortion. In the example using TDT acquired data, the data was resampled to 500Hz, and a 1^{st} order Butterworth highpass filter with a cut-off frequency at 1Hz was used to remove DC drift. The data was subsequently re-referenced using a common average scheme, with the effect of noisy electrodes mitigated by using a trimmed mean approach (e.g., removing the top and bottom 10% of electrodes at each sample point). These example implementations also included removing line noise at 60Hz and its harmonics (up to 240Hz) using 2^{nd} order IIR notch filters with a bandwidth of 1Hz. A period of silence was recorded before each experiment, and the corresponding data was normalized by subtracting the mean and dividing by the standard deviation of the pre-stimulus period. These implementations also included filtering data into two frequency bands known to be responsive to speech, namely, the high-frequency (HF) gamma band (70-150Hz), and the low-frequency (LF) delta and theta bands 1-8Hz). The power of the high-frequency band and the phase of the low-frequency band are modulated by speech. In order to obtain the power of the HF band, the data was first filtered into 8 frequency bands between 70 and 150Hz, using, for example, Chebyshev Type 2 filters, each with a bandwidth of 10Hz. The power analytic amplitude of each band could then be derived using a Hilbert transform. The average of all 8 frequency bands can then be used to represent the total HF power. To obtain the LF data, an 8^{th} order (4 sections) Butterworth lowpass filter was applied to the data with a corner frequency of, for example, 8Hz, and 20dB attention at 12Hz.

With continued reference to FIG. 2, signal separation processing is applied to the combined (mixed) audio signal (which may have been processed based on, for example, processing operation such as those described in relation to stage 210) at stage 220. In some embodiments, speech separation processing is based on a deep neural network (DNN) approach. After obtaining the mixed / combined audio signal, a spectrogram of the mixture is obtained This spectrogram is then fed to each of several DNNs, each trained to separate a specific speaker from a mixture (I)NN Spk1 to DNN SpkN). At the same time, a user may be attending to one of the speakers (in this case, Spk1). A spectrogram of this speaker is reconstructed from the neural recordings of the user. This reconstruction is then compared with the outputs of each of the DNNs using a normalized correlation analysis (as shown at stage 230) in order to select the appropriate spectrogram, which is then converted into an acoustic waveform and added to the mixture so as to amplify the attended speaker (and/or attenuate the signals corresponding to the non-attended speakers).

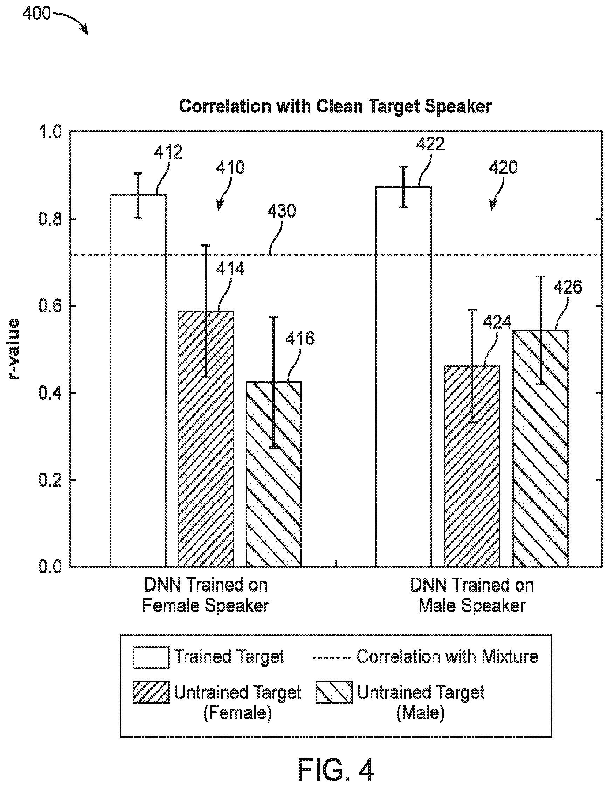

More particularly, In order to automatically separate each speaker from the mixture, a single-channel speech separation that utilizes, in some embodiments, a class of DNNs known as long short-term memory (LSTM) DNNs is employed. Each DNN is trained to separate one specific speaker from arbitrary mixtures. In an experiment, two speakers (Spk1F and Spk2M) were presented to each subject. However, a system configured to work in a real-world situation would generally contain multiple DNNs, each trained to separate specific speakers, any of whom may or may not be present in the environment. In the example system of FIG. 2, 4 DNNs were trained to separate 4 speakers (two female speakers and two male speakers), hereafter referred to as Spk1F, Spk2M, Spk3F, and Spk4M. In an example, all speakers were native American English speakers. In order to be used by the DNNs, the speech waveforms were converted, in the example experiment, into 100-dimensional Mel-frequency spectrograms. The goal was then to obtain an estimate S' of a clean target spectrogram S from a mixture M. To do so, a soft mask Y' is learned and applied to the mixture to mask the interfering speech. The squared Euclidian distance between the masked spectrogram and the clean target spectrogram is treated as the error in order to generate the gradient that is back propagated through the DNN to update the parameters. An objective function that may be used is: $E \left(\hat{Y}\right) = {‖ \hat{Y} M - S ‖}_{2}^{2}$

In the experimentation conducted for the implementations if the system 200, the input to the DNNs was the logarithm (base 10) of the spectrograms, normalized so that each frequency band had zero mean and unit variance. Each DNN, in the implementations realized and tested, contained four (4) layers with 300 nodes each, followed by a single layer containing 100 nodes with logistic activation to output a spectrogram. An acoustic waveform was generated by combining the spectrogram that was output by the DNN with the phase of the original mixture (e.g., inverting, in some embodiments, the spectrogram with the phase of the original mixture). In the implementations that were realized and tested, twenty (20) minutes of speech from the target speakers, and approximately five (5) hours of speech from interfering speakers were used. A target speaker sample was generally mixed with one interfering speaker, and both were mixed into the same channel and with the same root mean squared (RMS) intensity. Unseen utterances were used for testing (for both the target and interfering speakers). To ensure generalization, each of the DNNs did not receive training sample data for the other target speakers during training. That is, in the implementations realized and evaluated herein, a DNN trained to separate one speaker (e.g., Spk1F) was not exposed to training data for other speakers.

As will be discussed in greater detail below, in some embodiments, other types of speech separation processing may be applied to the mixed / combined signal. As noted, one speech separation approach that may be implemented is a deep attractor network (DANet) approach for separating multiple sound sources (e.g. speakers) from a single channel recording. Under this approach, the a deep learning framework for single channel speech separation is used that is configured to create attractor points in high dimensional embedding space of the acoustic signals, which pull together the time-frequency bins corresponding to each source. Attractor points may be created by finding the centroids of the sources in the embedding space, which are subsequently used to determine the similarity of each bin in the mixture to each source. The network is then trained to minimize the reconstruction error of each source by optimizing the embeddings. Advantages of the DANet approach is that it implements an end-to-end training, and it does not depend on the number of sources in the mixture. Two strategies that can be used with respect to the DANet implementations are the K-means strategy and the fixed-attractor-points strategy, where the latter requires no post-processing and can be implemented in real-time. In example system implementations of the DANet approach, the system was configured to output several waveforms, each corresponding to one sound source in the mixture, in response to an input mixed waveform. The processing operations of such a system implementation may include acquiring mixture speech signal with a (single) sensor, processing the signal to estimate a set of features, processing the features by a deep neural network (DNN) to assign a descriptor for each element in the signal, estimating the attribution of each element according to the physical properties of the descriptors, and recovering the target sources according to the estimation. Example embodiments based on the DANet approach can be incorporated into online applications or mobile devices to allow fast and accurate signal separation, and can also be deployed into hearing aids or earphones to be a front-end solution of source separation.

While the embodiments described herein may use multiple possible speech separation approaches, for ease of illustration and explanation, the approach using multiple DNN's trained for specific respective speakers (i.e., the approach illustrated in FIGS. 1 and 2) will be referenced. However, as noted, the identification of speakers a listener is attending to can be performed using other speech separation approaches, including the DANet approach.

Thus, with continued reference to FIG. 2 (and similarly to FIG. 1), selection of the speaker, whose speech data is to be provided to the target user, is performed through use of a speaker selection stage 230 and a stimulus reconstruction stage 240 of the system 200. The signals corresponding to the selected speaker are then processed (e.g., amplified) using the filtering processes implemented at stage 250. Additionally and/or alternatively, signals corresponding to non-selected speakers may be processed to, for example, attenuate those signals. In some embodiments, the stimulus-reconstruction procedure implemented by the stage 240 applies a spatiotemporal filter (decoder) to neural recordings to reconstruct an estimate of the spectrogram of the attended speaker. A 100-dimensional log Mel-frequency spectrograms may be downsampled by a factor of 10, resulting in ten (10) frequency bands used for neural recordings. Each decoder can be trained using the data from the single-speaker (S-S) experiment.

Electrodes may be chosen if they are significantly more responsive to speech than to silence. For the high gamma (HG) data, this means that the average power during speech is greater than during silence. For the low frequency (LF) data, electrodes may be chosen if the average power is either significantly greater or lower during speech than during silence. To perform statistical analyses, the data can be segmented into 500ms chunks and divided into two categories: speech and silence. Significance may then be determined using an unpaired t-test (false discovery rate (FDR) corrected, q < 0.05). This results in varying numbers of electrodes retained for each frequency band and each subject. The decoders may be trained using time-lags from -400 to 0 ms.

Determining to whom the subject user is attending (i.e., which speaker the target user is trying to listen to) may be implemented through a correlation analysis, e.g., using Pearson's r-value (e.g., the linear correlation measure between two variables). Typically, whichever spectrogram has the largest correlation with the reconstructed spectrogram is considered to be the attended speaker. However, in embodiments in which four (4) DNNs are used, each trained to separate a speaker that may or may not be present in the combined signal (mixture), the analysis becomes slightly more complex. Because the DNNs that do not see their designated speakers in the mixture are likely to output a signal very close to the mixture, it may be necessary to normalize the correlation values with respect to the mixture. This is because the correlation between the reconstructed spectrograms and the mixture can be very large.

In the continued discussion of correlation analysis processing, the following terminology and notations will be used. The *k*^{th} DNN (i.e., the DNN decoder configured to identify the *k*^{th} specific speaker) is referred to as *S*_{DNNk}, the spectrogram of the mixture signal is represented as *S*_{MIX}, and the reconstructed spectrogram (from the neural responses) as *S_{RECON}.* In order to emphasize large correlations, a Fisher transformation (inverse hyperbolic tangent) is applied to each r-value.

The normalization procedure involves five stages. First, the correlation between *S_{RECON}* and each *S*_{DNNk}, which is denoted as *ρ*₁ₖ is derived according to: ${ρ}_{1 k} = arctanh \left\{r\left({S}_{RECON}, {S}_{DNNk}\right)\right\}$ where *r*(*x*, *y*) is Pearson's correlation between the variables *x* and *y*, and arctanh is the inverse hyperbolic tangent function.

Next, the correlation between *S_{RECON}* and the difference between *S*_{DNNk} and *S*_{MIX}, which is referred to as *ρ*_{2k,} is computed according to: ${ρ}_{2 k} = arctanh \left\{\left({S}_{RECON},{S}_{MIX}-{S}_{DNNk}\right)\right\}$

This value, *ρ*₂ₖ, should be close to zero if a DNN is outputting the mixture, should be relatively small if it is outputting the attended speaker (because subtracting the attended spectrogram from the mixture will only leave behind portions of the unattended spectrogram), and should be relatively large if it outputs the unattended speaker (similarly, because only potions of the attended speaker will be left). Therefore, taking the difference of *ρ*₁ₖ and *ρ*₂ₖ, and dividing by their sum, should produce a score (*α*ₖ) that can differentiate between each of these cases, where *α*ₖ is computed according to: ${α}_{k} = \frac{{ρ}_{{1}_{k}} - {ρ}_{{2}_{k}}}{{ρ}_{{1}_{k}} + {ρ}_{{2}_{k}}}$

The computation of *α*ₖ is followed by a test-normalization, in which the *α* score for each DNN is normalized relative to the distribution of *α* scores from all DNNs, according to: ${β}_{k} = \frac{{α}_{k} - {μ}_{α}}{{σ}_{α}}$ where *µ_{α}* and *σ_{α}* are the mean and standard deviation of the distribution of α scores from all DNNs.

The next neural correlation processing stage includes subtracting the correlation between *S_{DNNk}* and *S_{MIX},* and adding the constant 1, providing a resultant normalized correlation value, Pₖ, for each DNN, which is computed according to: ${P}_{k} = {β}_{k} - arctanh \left\{\left({S}_{DNNk}, {S}_{MIX}\right)\right\} + 1$

The above normalization operation effectively penalizes a DNN that is simply outputting the mixture rather than separating the speakers. This could occur if a DNN's trained speaker was not in the mixture. The addition of the constant 1 is used to make the final result more intuitive, as otherwise the values would typically be less than zero.

In experimentations and testing of the neural correlation processing realized as part of the implementations described herein, the lowest two frequency bands (~50 - 200Hz) of the 10 frequency bands in the downsampled spectrograms were excluded to avoid bias towards male speakers whose fundamental frequency occupied the exclusion range region. Correlation values derived may thus correspond to the average of the r-values obtained across the remaining eight (8) non-excluded frequency bands.

In order to obtain a measure of the ability of the implemented systems described herein to determine the attended speaker from neural recordings, the reconstructed spectrogram is first segmented (from the multi-speaker experiments) into, for example, 20-second bins. In an example implementation, in which four (4) DNNs are trained to separate two female speakers (denoted as Spk1F and Spk3F) and two male speakers (Spk2M and Spk4M) from random mixtures, four normalized correlation values are produced by the DNN's for each segment (the normalized correlation values are denoted P1*_{f}*, P2*ₘ*, P3*_{f}*, and P4*ₘ*). When, for example, Spk1F and Spk2M are the only speakers that are presented to the subject (the listener), it is expected that P1*_{f}* and P2*ₘ* would be the largest, depending on whom the subject was attending to. If there are only two possible correlation values to choose from, a segment could be considered correctly decoded if the attended speaker produced the largest correlation with the reconstructed spectrogram. However, when there are multiple values to choose from, it is important to take into account any bias for a particular speaker. This is of particular importance when using intracranial data, because it is possible that some electrodes could be tuned to speaker-specific features, and respond to those features regardless of the attentional focus of the subject. To take into account any such potential bias, the Attention Decoding Index (ADI) metric is defined as the proportion of the number of correct hits minus the number of false positives, for target speakers. The ADI metric may be computed as: $ADI = \left({CH}_{spk 1}+{CH}_{spk2}-{FP}_{spk 1}-{FP}_{spk 2}\right) / nS$ where CH*_{SpkN}* and FP*_{SpkN}* are the number of correct hits and false positives for speaker N, respectively, and *nS* is the number of segments. The resultant metric is bounded between [-1,1]. In some of the experimentations and evaluation performed for the systems implemented herein, chance and significant ADI were determined by randomly shuffling the reconstructed spectrograms with respect to the DNN outputs 100 times for each subject. This allowed finding the actual chance performance and comparing that to the performance of the system (to test the significance of the result). A null distribution of the ADI was then obtained using the same normalized correlation analysis described above. The resulting mean +/- SD performance was 0 +/- 0 15 for both HF and LF data. Significant performance was therefore determined to be 0.45 (three times the standard deviation). For comparison, the ADI that would be achieved using the clean (ideal) spectrograms of Spk1F and Spk2M was also computed. In that ideal situation, it was assumed that the DNNs trained on Spk3F and Spk4M outputted the mixture.

In some of the experimentations and evaluations conducted, in order to simulate a dynamic scenario in which a subject (a listener) was switching attention, the neural data was artificially divided and concatenated into consecutive segments in which subjects were attending to either speaker. Specifically, the data was divided into ten (10) segments, each lasting 60 seconds. The subjects attended to the male speaker for the first segment. To assess the ability to track the attentional focus of each subject, a sliding window approach was used in which correlation values were obtained every second over a specified window. Window sizes ranging from 5 to 30 seconds (in 5 second increments for 6 window sizes in total) were used. Larger windows should lead to more consistent (i.e., less noisy) correlation values and provide a better estimate of the attended speaker. However, they should also be slower at detecting a switch in attention.

Thus, implementations described herein include a system comprising at least one microphone to obtain a combined sound signal for sound combined from multiple sound sources in an area in which a person is located, one or more neural sensors to obtain neural signals for the person, with the neural signals being indicative of one or more of the multiple sound sources the person is attentive to, and a controller coupled to the at least one microphone and the one or more neural sensors. The controller is configured to apply speech-separation processing (e.g., neural-net processing such as deep neural network, or DNN) to the combined sound signal from the multiple sound sources to derive a plurality of separated signals that each contains signals corresponding to different groups of the multiple sound sources, select one of the plurality of separated signals based on the obtained neural signals for the person, and process the selected one of the plurality of separated signals.

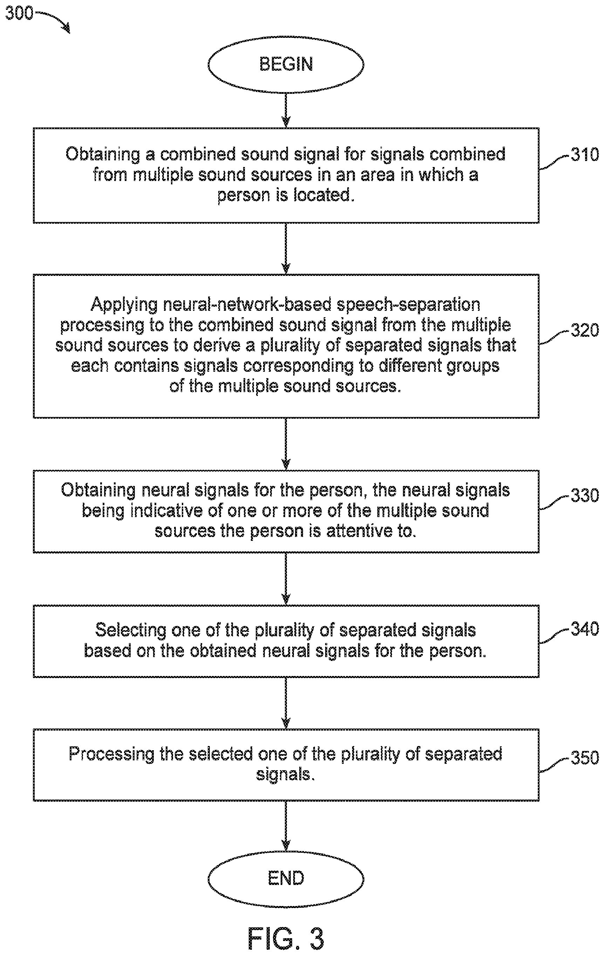

With reference now to FIG. 3, a flowchart of an example procedure 300 for attentional selection of a speaker in a multi-speaker environment. The procedure 300 includes obtaining 310, by a device, a combined or mixed sound signal for signals combined from multiple sound sources in an area in which a person is located. As noted, the device of procedure 300 (that performs that various operation of the procedure 300) may include one or more of, for example, a hearing device, a hearing enhancement device (to allow better hearing in a very noisy environment), a noise cancellation device, a virtual reality device, and/or other types of hearing augmentation devices. In some embodiments, the combined signal may be obtained through use of a single receiving sensor (e.g., a single microphone), although the procedure 300 may be performed using multiple receiving sensor which may be part of the device implementing the procedure 300.

As further shown in FIG. 3, the procedure 300 includes applying 320, by the device, neural-network-based speech-separation processing to the combined sound signal from the multiple sound sources to derive a plurality of separated signals that each contains signals corresponding to different groups of the multiple sound sources. Applying the neural-network-based speech-separation processing to the combined sound signal from the multiple sound sources may include providing the combined sound signal from the multiple sound sources to a deep neural network (DNN) configured to identify individual sound sources from the multiple sound sources based on the combined sound signal. In some embodiments, the DNN may include a plurality of individual DNN's (e.g., long short-term memory (LSTM) DNN's) that are each configured to separate one respective specific speaker from an arbitrary mixture of signals. Configuring the individual DNN's to separate their respective specific speakers may be realized through an initial training of the DNN's using speech data from the specific speaker, and speech data from interfering speakers (e.g., a combined / mixed speech signals). In some embodiments, speech separation processing may be applied to resultant data derived from the raw combined speech data (signals). For example, the speech separation processing may be applied to sound spectrogram data to derive multiple resultant speaker spectrograms. In such embodiments, the procedure 300 may further include generating a sound spectrogram from the combined sound signal, and applying the speech-separation processing to the generated spectrogram to derive multiple resultant speaker spectrograms.

As noted, in some embodiments, other speech separation approaches, such as the deep attractor network (DANet) approach, more particularly discussed below, may be used for the speech separating processing performed on the combined speech data, or performed on some resultant data derived from the combined speech data. Thus, in implementations to realize the deep attractor network approach, the combined sound signal may define a time-frequency embedding space, and applying the speech-separation processing to the combined sound signal may include determining respective reference points for each of the multiple sound sources, with the reference points representing locations of the sources in the embedding space for the combined sound signal, deriving masks for the determined reference points, and extracting at least one of the multiple sound sources using at least one of the derived masks. In such embodiments, determining the respective reference points may include determining the respective reference points using a deep neural network. Deriving such masks may include computing similarity between embedded time-frequency points within the embedding space and the determined respective reference points. The reference points may include attractor points in the embedding space.

While the speech-separation processes described herein are discussed primarily in relation to attentional selection application (e.g., to enhance the speech of a speaker, from a plurality of speaker, that the listener is focusing on), the speech-separation processes described herein may be utilized for other application. For example, the speech separation processes may be used in surveillance application (to separate and record speech from a combined sound signal corresponding to different speakers). In other words, the speech separation processes described herein may be used to automatically analyze and transcribe survilance audio, which can be hundreds of hours long. The speech separation processes can be used as a preprocessing step, where the target speech sounds are first separated from other sources that might have been present during the recording, and the cleaned speech signal can be passed to speech recognition implementation. In another example, the speech separation processes described herein may be used for virtual reality applications, in which speech separation techniques discussed are used to reconstruct speaking objects from a pre-recorded source (and render the separated speech signals into a virtual audio (or audio-visual) scene). One of the challenges in 3D virtual audio is that rendering an acoustic scene requires separate audio tracks for individual sources, so that the sound sources can be processed separately and placed in different positions relative to the listener. When such separate audio tracks are not available, the speech processing procedures described herein can be used to first separate all the sources in the recording, and subsequently re-syntehsize them with desired location and attribute.

With continued reference to FIG. 3, the procedure 300 also includes obtaining 330, by the device, neural signals for the person, with the neural signals being indicative of one or more of the multiple sound sources the person is attentive to. Obtaining the neural signals for the person may include obtaining one or more of, for example, electrocorticography (ECoG) signals for the person, neural measurements via a non-invasive scalp, and/or in-ear EEG recordings.

Using the neural signals obtained for the person (the listener), the procedure 300 includes selecting 340 one of the plurality of separated signals based on the obtained neural signals for the person. As noted, in some embodiments, selecting the one of the plurality of separated signals may include generating an attended speaker spectrogram based on the neural signals for the person, comparing the attended-speaker spectrogram to the derived multiple resultant speaker spectrograms to select one of the multiple resultant speaker spectrograms, and transforming the selected one of the multiple resultant speaker spectrograms into an acoustic signal. In such embodiments, comparing the attended-speaker spectrogram to the derived multiple resultant speaker spectrograms may include comparing the attended-speaker spectrogram to the derived multiple resultant speaker spectrograms using normalized correlation analysis.

The procedure 300 further includes processing 350 the selected one of the plurality of separated signals. For example, in some embodiments, processing the selected one of the plurality of separated sound signals may include one or more of amplifying the selected one of the plurality of separated signals, and/or attenuating at least one non-selected signal from the separated signals.

The implementations described herein were tested to evaluate their performance and efficacy. FIG. 4 includes a graph 400 providing an analysis of the DNN output correlation. To test the performance of the DNNs at single-channel speaker-separation, multiple mixtures of random speakers were created, with four (4) target speakers (2 male and 2 female), and with each mixture being passed through four DNNs that were each pre-trained to separate one of the target speakers. Performance was measured by obtaining the correlation (r-value) between the output of each DNN and the spectrogram of the clean target speaker. The results from the four networks are split into two by averaging the r-values obtained from the networks that were trained to separate a female speakers (left portion 410 of the graph 400) or male speakers (right portion 420 of the graph 400). The bars 412 and 422 show the results when a DNN was presented with a mixture containing its designated pre-trained speaker (trained target), while the bars 414, 416, 424, and 426 are the results when the mixtures contained an undesignated speaker (i.e., an untrained target, with the bars 414 and 424 corresponding to female speakers, and 416 and 426 corresponding to make speakers). The dotted line 430 shows the average correlation between the raw mixture and the clean target speaker. The results illustrated in FIG. 4 show that, as expected, the networks could not separate undesignated speakers from the mixture, but their outputs were slightly more similar to the target speaker when that speaker was the same gender as the network's designated speaker. This result is likely because of the characteristic differences between male and female speakers (e.g., pitch, spectral envelope).

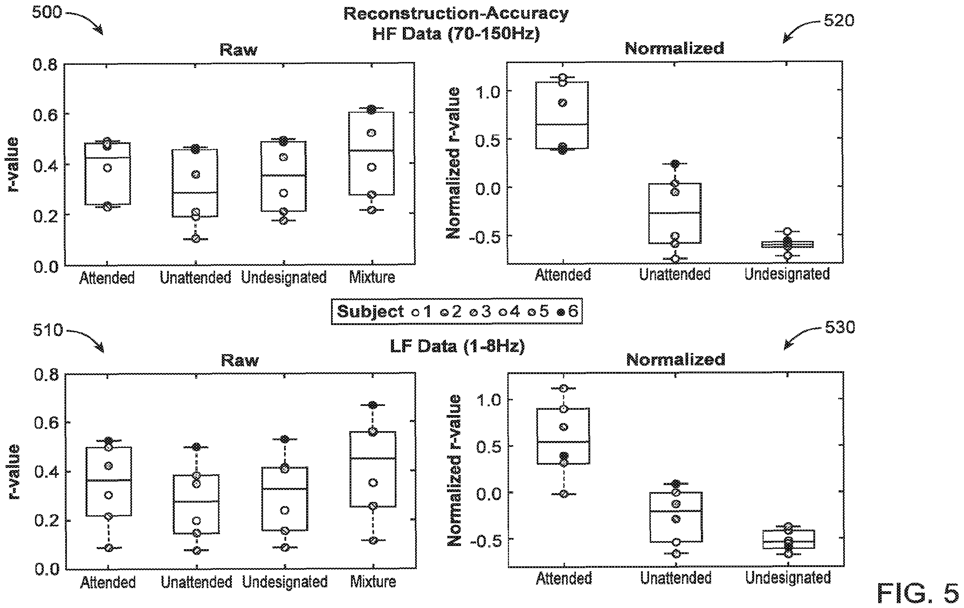

To determine which speaker a subject was attending to, a neural correlation analysis was performed to compare the reconstructed spectrograms (from the neural data) with the output of each DNN. FIG. 5 includes graphs 500, 510, 520, and 530, illustrating reconstruction accuracy for the neural correlation analysis. The left part of FIG. 5, including the graphs 500 and 510, provides the reconstruction accuracy in terms of raw r-values, and shows the average correlations between the reconstructed spectrograms and the outputs of the DNNs for each subject and neural frequency band (where each subject is represented by a dot of a different shade). Because, in the experiments conducted, the subjects alternated their attention between two speakers, the r-values labeled as attended and unattended come from the DNNs trained on Spk1F and Spk2M. The r-values labeled as undesignated come from the DNNs that were trained for Spk3F and Spk4M (as used herein, "undesignated" means that the DNN's in question were not trained to separate either speakers in the mixture that the listener actually listened to). Although the attended r-values are typically higher than the unattended r-values, there is also a high correlation between the reconstructed spectrograms and the mixture. Because the DNNs that do not see their designated speaker usually output spectrograms similar to the mixture, the undesignated correlation values were also relatively high.

In some embodiments, to improve the reconstruction analysis, the r-values are normalized with respect to the mixture. An example normalization solution involves three key steps: (i) incorporating the mixture into the correlation analysis (in accordance with, for example, Equations 2 and 3 above), (ii) performing a test-normalization (t-norm) to equalize the outputs of each DNN with respect to each other (in accordance with, for example, Equation 4, above), and (iii) subtracting the correlation between the DNN output and the mixture (in accordance with, for example, Equation 5). The graphs 520 and 530 at the right portion of FIG. 5 provide the correlation analysis results in terms of normalized r-values, and indicate that after applying the normalization processes, the attended correlation values were far higher than either the unattended or undesignated r-values, which allows adequate decoding of the attended speaker.

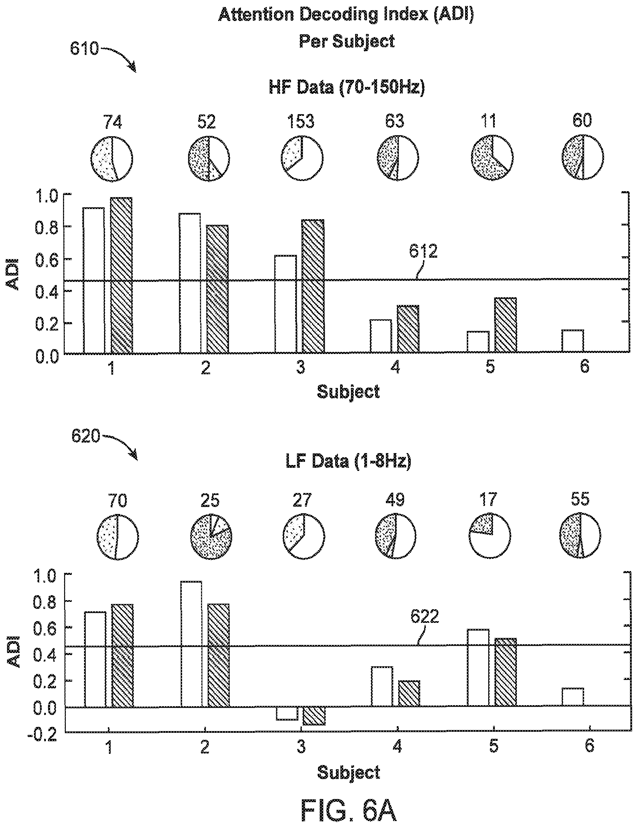

Given that the normalized correlation values differentiated between attended, unattended, and undesignated r-values, it is possible to decode the attentional focus of the subjects using the DNN outputs. After segmenting, in some implementations, the data into 20-second chunks, a segment was labeled as a correct hit (CH) if the normalized correlation between the reconstructed spectrogram and the output of the DNN that was trained to separate the attended speaker was the highest of all 4 DNN outputs. A segment was considered to be a false positive if the correlation with the unattended speaker was higher than all others. The Attention Decoding Index (ADI) is defined as the proportion of segments correctly decoded minus the proportion of false positives. For comparison, the ADI obtained is also calculated using the ideal (clean) spectrograms of Spk1F and Spk2M. FIG. 6A includes graphs 610 and 620 showing the proportion of segments (20s) in which the attentional focus of each subject could be correctly determined using HF data (the graph 610 at the left part of FIG. 6A) and LF data (the graph 620 at right part of FIG. 6A). The attentional focus of a subject was considered to be successfully decoded if the ADI was greater than the 0.45 threshold (indicated by the lines 612 and 622) calculated using a random shuffle of the data. Of the 6 subjects who participated in an experimental study, the attentional focus of subjects 1, 2, and 3 could be decoded using HF (70-150Hz) data, and subjects 1, 2 and 5 using LF (1-8Hz) data. Because different regions in the auditory cortex are differentially modulated by attention, the variability in ADI across subjects was thought to be related to the anatomical locations of electrodes. For each subject, and for each frequency band, the pie charts in the graphs 610 and 620 illustrate the proportion of electrodes that were responsive to speech from two (2) anatomical regions: Heschl's gyrus, and the superior temporal gyrus. Electrodes that were responsive to speech, but that were not in either of these locations, are collectively referred to as Other. These Other electrodes were located in various anatomical regions including the middle and inferior temporal gyri, and planum temporale. The single number displayed above each pie chart refers to the total number of electrodes that were responsive to speech for that subject and for the corresponding frequency band.

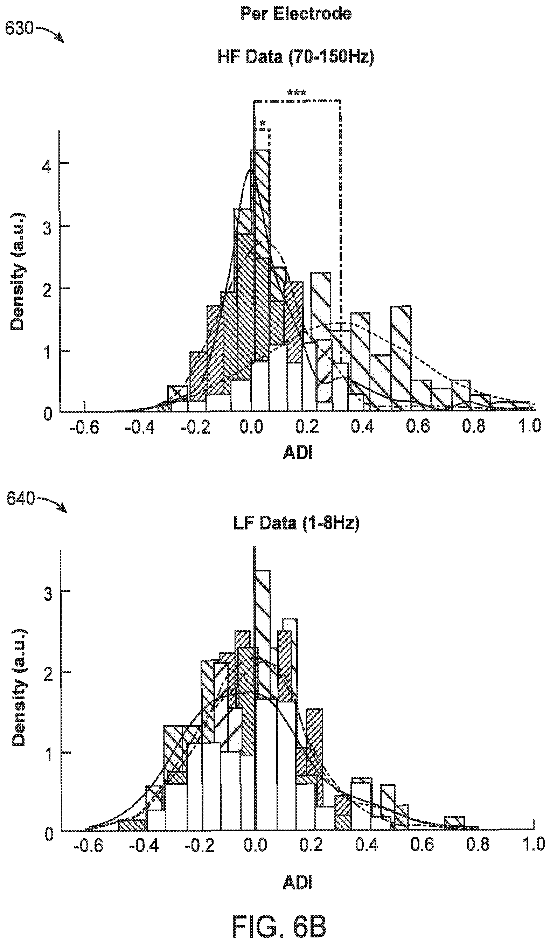

To determine which anatomical regions produced the highest ADI, a single electrode analysis was performed, as illustrated in FIG. 6B, which includes graphs 630 and 640 presenting ADI measures per electrode. Similar to FIG. 6A, electrodes are shaded according to anatomical location: Heschl's gyrus (FIG; medium dark shade), superior temporal gyrus (STG; dark shade), and Other (light shade). When using HF data, electrodes in STG and Other produced ADIs significantly greater than zero (Wilcoxon signed-rank test; p < 0.001), compared to the use of electrodes in HG (p = 0.02). Using LF data, no region produced ADIs significantly greater than zero (p > 0.05). These results show that electrodes placed in STG are important for successfully decoding attention (an important finding for non-invasive AAD research where source localization methods can be used to target specific brain regions).

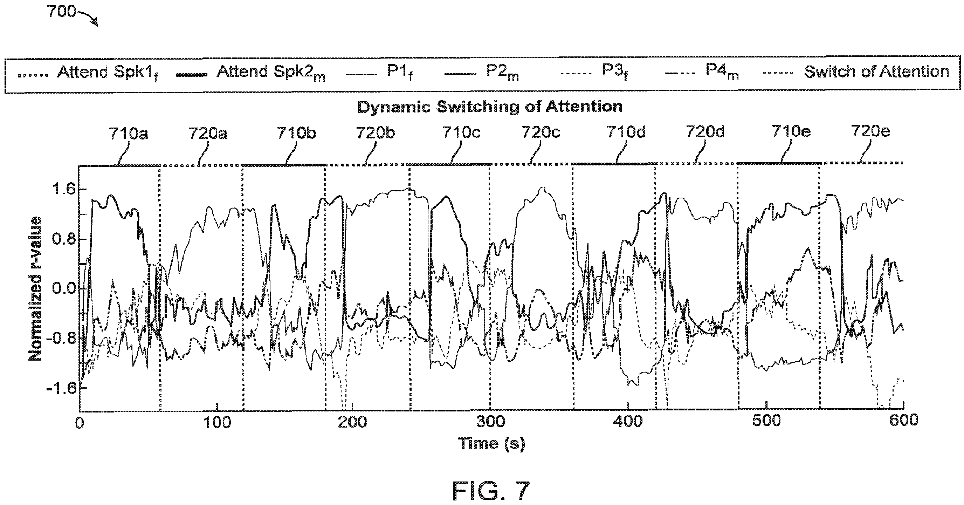

In a further experiment of the implementations described herein, to simulate a dynamic situation where subjects alternated their attention between the two speakers, the data was segmented and concatenated into 60-second chunks, with a subject's attention switching at the beginning of each chunk. FIG. 7 shows the results of the analysis for dynamic switching of attention for an example subject (subject 1) using HF data and a 20 second window size. Each solid vertical line marks a switch in attention. Portion 710a-e of the graph correspond to segments when the subject was attending to Spk2m, and portions 720a-e correspond to segments when the subject was attending to Spk1f. Normalized correlation values for each of the 4 DNNs are plotted at the bottom of the figure. From this analysis, a measure of decoding-accuracy was obtained, which was defined as the percentage of samples in which the correct target speaker produced the highest normalized correlation value. Unlike the ADI method discussed above, this method does not formally take into account false-positives. This is because the sliding window approach inevitably produces false-positives around transitions in attention that are not due to a bias towards a particular speaker, but are instead an inherent property of the methodology. However, these false-positives will still reduce the decoding-accuracy achievable because the correct target speaker will not produce the highest correlation values in these regions. A decoding-accuracy of 75% was observed for the data displayed in FIG. 7.

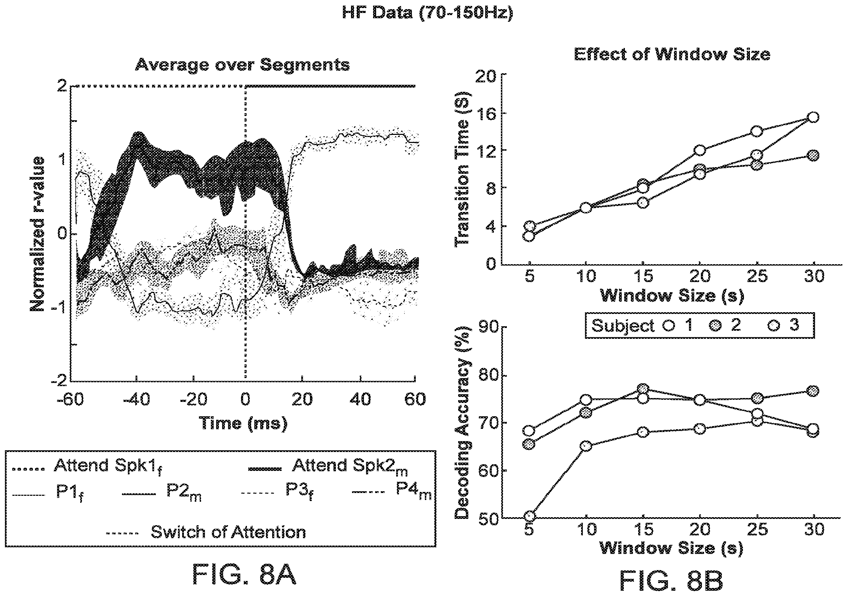

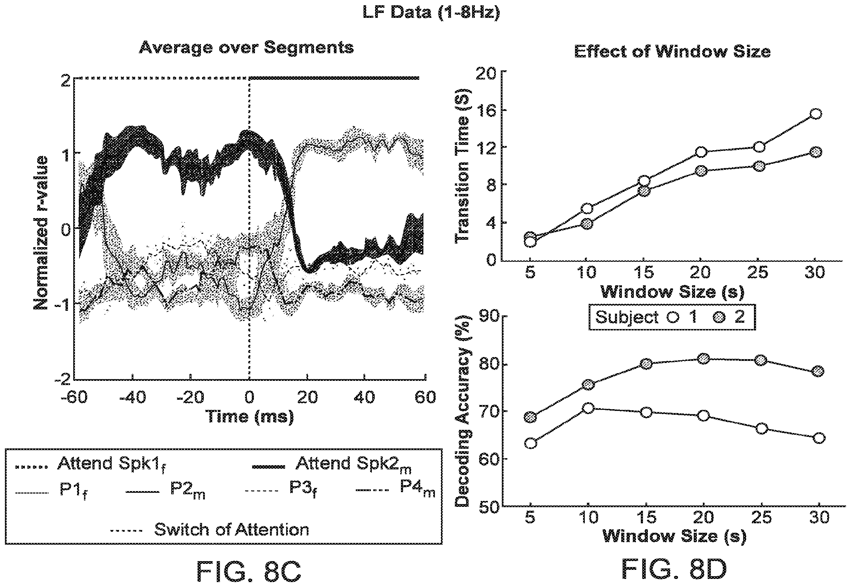

FIG. 8A displays the same results as shown in FIG. 7, but averaged over all sections when the subject was attending to Spk2m (-60s - 0s) and Spk1f (0s - 60s). Shaded regions denote standard error. This analysis was used in order to determine a measure of the transition time (how long it takes to detect a switch in attention for a subject). Transition times were calculated as the time at which the blue (Spk2M) and red (Spk1F) lines intersected in the averaged data. This calculation was performed for each subject whose attentional focus could be decoded and for all window-sizes (between 5 and 30 seconds; see FIG. 8B). For all subjects, the transition-time increases monotonically with larger window-sizes. Also shown is the decoding-accuracy that was achieved for each window-size (see FIG. 8B; bottom panel). These results suggest that window-sizes between 15 and 20 seconds achieve the best trade-off between speed and accuracy, and that longer window-sizes produce a reduction in decoding-accuracy. Larger window-sizes result in longer transition times, and therefore more false-positives after a switch in attention. FIG. 8C shows an example of the same analysis as in FIG. 8A, but instead uses LF data from subject 2. FIG. 8D illustrates the effect of the window size on transition-time and decoding-accuracy when using the LF data for subjects 1 and 2.

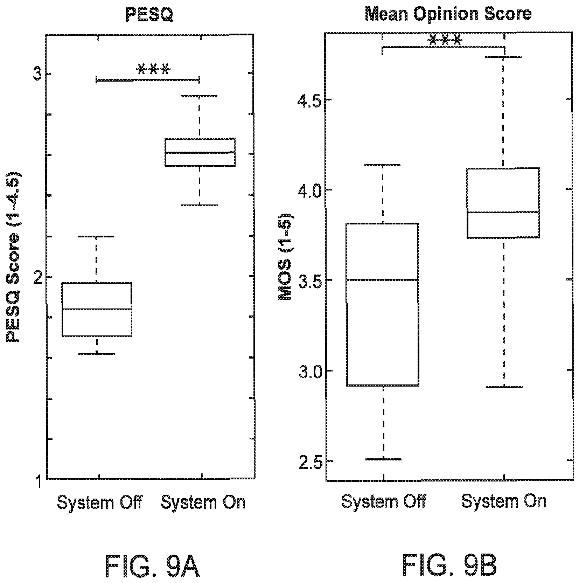

While the decoding-accuracy score (as presented in FIGS. 8A-D) is an important objective measure of performance, an objective of the experimentations and studies of the implementations described herein was to also enhance the quality of the audio by amplifying the attended speaker relative to the other sound sources. The quality of the output depends on a combination of factors including the accuracy of the DNN speech separation, the neural reconstruction, the attention decoding, and the amplification scheme. The quality of the final output audio was tested using both subjective and objective tests. The output of the system proposed herein produced an objectively cleaner speech signal with a significant increase in the Perceptual Evaluation of Speech Quality (PESQ) score (Wilcoxon signed-rank test, p < 0.001; see FIG. 9A showing the PESQ results with the implemented system in OFF state and ON state).

To subjectively test the preference of users on the quality of the audio output of the systems described herein in a multi-speaker scenario, a psychoacoustic experiment was performed. More particularly, twelve subjects (seven female), aged between 20 and 28 years (mean ± SD, 22 ± 2.5) took part. All subjects reported normal hearing. The stimuli used for this experiment were the same as those used for the neural experiment, i.e. subjects were always presented with a mixture of Spk1F and Spk2M. However, the way the stimuli were presented was altered to obtain as much information as possible about the subjects' perception. The experiment was divided into four blocks, each containing fifteen (15) trials. Each trial included a single sentence. Before each block, the subjects were instructed to pay attention to one of the speakers (starting with the male) and to switch attention on each successive block. In order to test the intelligibility of the speech, after each trial (sentence) the subjects were presented with a transcription of the sentence of the attended speaker with one word missing. Subjects were instructed to type the missing word (the intelligibility task).

Subjects were also asked to indicate the difficulty they had understanding the attended speaker on a scale from 1 to 5, i.e., very difficult (1), difficult, not difficult, easy, and very easy (5) From these responses, the Mean Opinion Score (MOS) was calculated. This allowed obtaining both an objective measure of intelligibility and a subjective measure of listening effort (MOS). For half of the experiment, both speakers were presented at the same RMS power. For the other half, an attempt was made to amplify the attended speaker. Block order was counterbalanced across subjects. In total, the experiment lasted approximately 15 minutes, during which subjects were presented with 4 minutes and 11 seconds of audio. FIG. 9B is a graph showing the MOS scores when the system was off and on, and illustrates that MOS measures were significantly improved when the system was on. Particularly, all but one subject reported a larger MOS when the system was on, with a median MOS of 3.87 (25^{th} percentile, 3.73; 75^{th} percentile, 4.12) versus a median MOS of 3.5 (25th percentile, 2.9; 75th percentile, 3.8) when the system was off. The one subject who reported no reduction in listening effort had almost identical MOS scores for both system on (3.7) and system off (3.8). The majority of subjects also reported a preference for the segments where the system was turned on (9 out of 12), and a majority reported a preference for using the system once they were informed of its nature (10 out of 12). In the missing word task, there was no significant difference in the numbers of words that were correctly reported when the system was on versus off. This lack of improved intelligibility is a well-known phenomenon in speech enhancement research where noise suppression does not typically improve intelligibly scores, even though the listening effort is reduced.

As part of the psychoacoustic experimentation conducted herein, real neural data was used to demonstrate how the overall system could be implemented. Specifically, the neural data from one of the subjects (subject 2) was used. To dynamically track the attentional focus of the subject, a strategy similar to the artificial switching of attention discussed earlier was implemented, i.e., use a sliding window approach, attempting to decode the attention of the subject every second. LF data was used, as opposed to the HF data, to be as comparable as possible with noninvasive technologies which typically only have access to low-frequency neural activity. Additionally, a window size of 20 seconds was used in order to be consistent with the decoding strategies discussed herein. Whenever it was possible to correctly classify the attended speaker from the neural data for that subject, the output from the correct DNN was added to the mixture. However, if a mistake was made, and the subject's attentional focus was misclassified, the output from whichever DNN produced the largest normalized correlation was presented. The DNN output was added at a level of +12dB relative to the mixture. In addition to obtaining measures of intelligibility and listening effort, a determination of the participants' overall preference was made. Subjects were informed before the experiment that they would have to report which half of the experiment required less effort to understand the attended speaker, and were reminded half way through. The experimentation also asked the users as to whether they would prefer to use the system if they knew that it was not perfect.

Thus, as discussed herein, an end-to-end system that incorporates a single channel automatic speech-separation process into the auditory attention-decoding (AAD) platform was described. The approaches discussed herein alleviate the spatial separation requirements of multi-channel approaches, but can also be used in tandem with beamforming methods for optimal source separation. In addition to successfully identifying the attended speaker, the implementations described herein also amplify that speaker, resulting in an improvement in the subjective quality of the listening experience. Combined with the latest developments in AAD research, the systems described herein can be used to realize hearing aid devices that can automatically and dynamically track a user's direction of attention, and amplify an attended speaker (and/or attenuate non-attended speaker(s)). In some embodiments, neurological signals can be obtained through invasive ECoG recordings from neurological patients, which allows examining the upper bound of decoding speed and accuracy, determining the varying contributions of different auditory cortical areas, and separately examining attention decoding using low (1-8Hz) and high (70-150Hz) frequency neural data. In some embodiments, neural data may be obtained also through non-invasive neural recordings.

While the subjects in the experiments conducted for the implementations described herein were only presented with mixtures of two speakers (Spk1F and Spk2M), the implementations can be extended to a more general case of multiple speakers. Each DNN of the implementation may therefore be able to separate a trained target speaker from other unseen speakers.

The proposed system can switch to default operation when no target speaker is detected. Generally, a new speaker can be easily added to the system, requiring only a small amount of clean speech from the new target speaker (e.g., ~20 minutes). Because the reconstruction process from neural data may be achieved using single speaker data training, adding a new speaker does not involve recording new neural responses for that speaker. A practical limitation for all processes intended for hearing aids (or other hearing augmentation devices) is that hardware constraints could limit the number of DNNs that could be housed inside a portable device. However, modem hearing aids are able to perform off-board computing by interfacing with a cell phone, and specialized hardware is also becoming available for low-power neural network implementations. Another consideration is the fact that DNNs rely heavily on the data used to train them. Therefore, additional training may be required to separate speakers under different environmental conditions. Also, because people tend to involuntarily speak louder in noisy situations, which affects acoustic features such as pitch, rate and syllable duration, this would also need to be taken into account during training of the DNNs.

It was determined that the reconstructed spectrograms in data had a high correlation with the raw mixture. This is a problem that needs to be addressed, because a DNN is likely to output the mixture when its designated speaker is not present. The reason why the reconstructed spectrograms had such a high correlation with the mixture can be understood by looking at the single-electrode analysis. It was determined that many speech responsive electrodes are not modulated by attention, and instead encode both the attended and unattended speakers. Therefore, training decoders using all speech-responsive electrodes will lead to reconstructions that are similar to the mixture. The analysis also revealed that the location of electrodes in the brain played an important role in decoding attention. This result is likely due to the variable degree of attentional modulation in various parts of the auditory system. There was also a dichotomy between the high and low frequency data, where the accuracy of decoding was not always related, possibly due to the different neural generators of these two frequency bands.

In a real-world situation, it is likely that users would want to dynamically switch their attention between multiple speakers as a conversation progresses. Although the subjects in the experiments conducted for the implementations described herein alternated their attention between two speakers, they did not do so in a dynamic fashion. Rather, there was a substantial break between each block of the experiment. When simulating switching of attention, the window size used for estimation has an effect on both decoding-accuracy and transition-time (the time it takes to detect a switch in attention). The results of the experiments indicated that there is an optimal window-size for decoding-accuracy: shorter window sizes produce r-values that are too noisy, and longer window sizes prohibit the rapid detection of switches in attention. This problem is particularly important when using neural signals with a lower signal to noise ratio (such as around the ear, or in ear EEG). It is possible that more elaborate decoding processes can be used to speed up decoding and provide a better trade-off between decoding-accuracy and transition-time.

One important requirement of speech enhancement techniques is to ensure that the resulting speech is not distorted or corrupted, as users tend to prefer no enhancement over an amplified but distorted signal. In the experiments conducted, the automatically separated target speaker was amplified by +12dB relative to the mixture . This level has been shown to significantly increase the intelligibility of an attended speaker in a two-talker scenario (from ≈88% to 98%). Importantly, an unattended speaker should still be audible so that users can switch their attention should they choose to do so. It is still possible to understand speakers when they are attenuated by 12dB, although intelligibility drops to ≈ 78%. These parameters need to be further optimized when this type of system is tested in hearing impaired listeners and in closed-loop setups, where the decoding processes and a subject's brain can co-adapt to converge to a suitable solution. It was determined that there is a noticeable increase in the mean opinion score (MOS) when the implementations described herein were used, and almost all subjects reported that they would prefer to have the system turned on, a finding that supports the implementations' potential as a useful and effective way to identify and amplify an attended speaker.

### Deep Attractor Network for Signal Separation

As noted, in some embodiments, a deep learning framework, also referred to as the attractor network, is implemented to solve the source separation problem. The term attractor is motivated by the well-studied perceptual effects in human speech perception which suggest that the brain circuits create perceptual attractors (magnets) that warp the stimulus space so as to draw the sound that is closest to it, a phenomenon that is called Perceptual Magnet Effect. The proposed model works on the same principle by forming a reference point (attractor) for each source in the embedding space which draws all the T-F bins toward itself. Using the similarity between the embedded points and each attractor, a mask is estimated for each sources in the mixture. Since the mask is directly related to the attractor point, the proposed framework can potentially be extended to arbitrary number of sources without the permutation problem. Moreover, the mask learning allows a very efficient end-to-end training scheme and highly reduces the computation complexity compared with the deep-clustering (DC) approach and the permutation invariant training (PIT) approach. In deep clustering, a network is trained to generate discriminative embedding for each time-frequency (T-F) bin with points belonging to the same source forced to be closer to each other. DC is generally able to solve both permutation and output dimension problem to produce the state of the art separation performance. The main drawback of DC is its relative inefficiency to perform end-to-end mapping, because the objective function is the affinity between the sources in the embedded space and not the separated signals themselves. Minimizing the separation error is done with an unfolding clustering system and a second network, which is trained iteratively and stage-by-stage to ensure convergence. The PIT algorithm solves the permutation problem by pooling over all possible permutations for N mixing sources (*N*! permutations), and using the permutation with lowest error to update the network. The PIT approach was shown to have comparable performance as DC. However, PIT approach suffers the output dimension mismatch problem because it assumes a fixed number of sources. PIT also suffers from its computation efficiency, where the prediction window has to be much shorter than context window due to the inconsistency of the permutation both across and within sample segments.

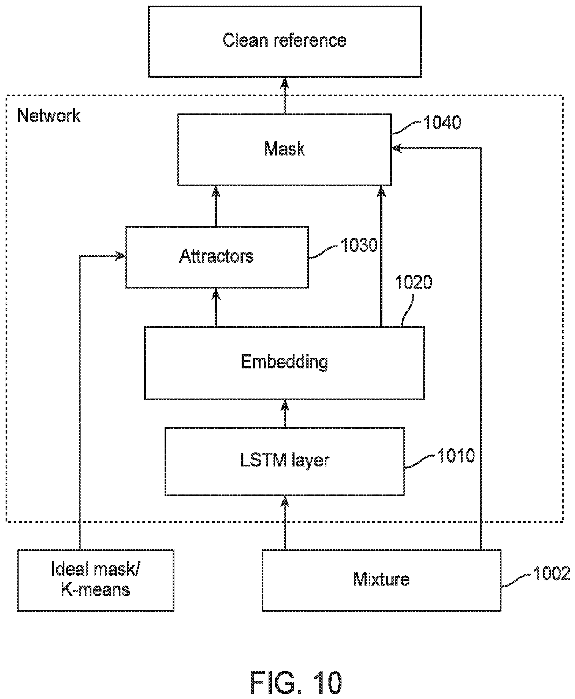

With reference to FIG. 10, a diagram of a proposed system architecture 1 000 to implement a deep-attractor network approach is provided. As shown, the system 1000 receives as input a mixture signal 1 002 (e.g., a multi-speaker combined signal) via an input sensor (e.g., a single or multiple microphones coupled to a device such as a hearing devices, or some other hearing augmentation device). The received input mixture signal 1002 is provided to a deep learning neural network 1010, which may be implemented, for example, as an LSTM layer. In some embodiments, the neural network is trained to map the mixture sound X to a k dimensional embedding space (represented by the box 1020), such that it minimizes an objective function such as the following: $L = {\sum }_{f , t , c} {‖ {S}_{f , t , c} - {X}_{f , t} \times {M}_{f , t , c} ‖}_{2}^{2}$ where S is the clean spectrogram (frequency F × time 7) of *C* sources, *X* is the mixture spectrogram (frequency *F* × time *T*), and *M* is the mask formed to extract each source. Other objective functions may also be used.

The mask is estimated in the *K* dimensional embedding space of each T-F bin, represented by *V* e *R*^{*FT*×*K*}: ${M}_{f , t , c} = Sigmoid \left({\sum }_{k} {A}_{c , k} \times {V}_{ft , k}\right)$ where *A* ∈ *R*^{*C*×*K*} are the attractors (represented in box 1030) for the *C* sources in the embedding space, learned during training, which are defined as ${A}_{c , k} = \frac{{\sum }_{f , t} {V}_{k , ft} \times {Y}_{c , ft}}{{\sum }_{f , t} {Y}_{c , ft}}$ where *Y* ∈ *R*^{*FT*×*C*} is the source membership function for each T-F bin, i.e., *Y_{tf,c}* = 1 if source c has the highest energy at time *t* and frequency *f* compare to the other sources.

The objective function in Equation 7 includes of three parts. During training, an embedding *V* is first computed through a forward pass of the neural network for each given mixture. Then an attractor vector is estimated for each source using Equation 9. This can be done in several ways. The most straightforward method for attractor generation is to find the source centroid, as defined in Equation 9.

Next, a reconstruction mask is estimated (at box 1040) for each source by finding the similarity of each T-F bin in the embedding space to each of the attractor vectors *A*, where the similarity metric is defined in Equation 8. This particular metric uses the inner product followed by a sigmoid function which monotonically scales the masks between [0, 1] Intuitively, if an embedding of a T-F bin is closer to one attractor, then it means that it belongs to that source, and the resulting mask for that source will produce larger values for that T-F bin. Since the source separation masks for each TF bin should add up to one, particularly in difficult conditions, the sigmoid function (of Equation 8) can be replaced with softmax function: ${M}_{f , t , c} = Softmax \left({\sum }_{k} {A}_{c , k} \times {V}_{ft , k}\right)$

Finally, a standard L2 reconstruction error is used to generate the gradient, as shown in Equation 7. Therefore, the error for each source reflects the difference between the masked signal and the clean reference, forcing the network to optimize the global reconstruction error for better separation. The proposed net is referred to as deep attractor network (DANet).

As noted, the DANet approach has several advantages. Firstly, DANet removes the stepwise pre-training process (required, for example, in the DC methodology) to allow end-to-end training. Another advantage of the DANet approach arises from flexibility in the number of sources in the mixture.

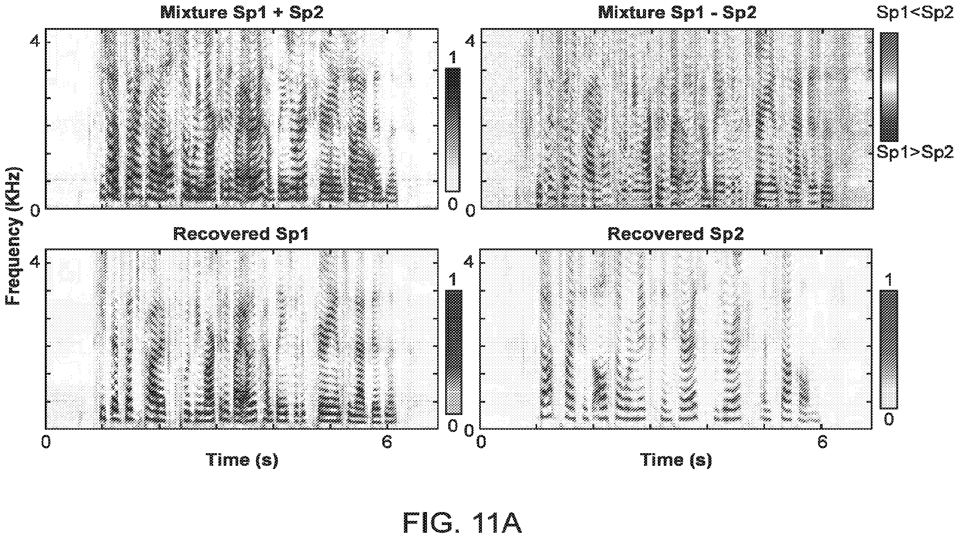

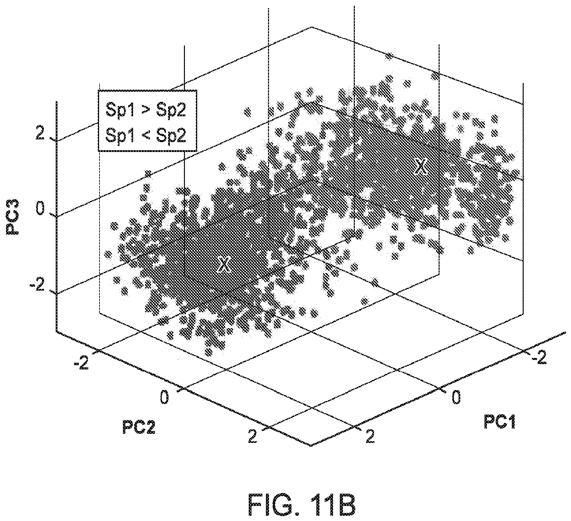

Attractor points can be estimated using various processes other than the average-based approach. One possibility is to use weighted average. Since the attractors represent the sources' center of gravity, only the embeddings of the most salient T-F bins may be included, which leads to more robust estimation. This strategy can be investigated by using an amplitude threshold in the estimation of the attractor. Alternatively, a neural network model may also be used to pick the representative embedding for each source, an idea which shares similarities with encoder-decoder attention networks. During test time, because the true assignment Y is unknown, two strategies can be applied to form the attractor points. The first is similar to the strategy used in DC, where the centers are found using post K-means process. The second strategy is based on the observation that the location of the attractors in the embedding space is relatively stable. This observation is shown in FIGS. 11A-B, which includes, at FIG. 11A, graphs showing an example of a mixture, the difference between two speakers in the mixture, and the separated spectrograms of the two speakers using a DANet implementation, and, at FIG. 1113, a graph showing locations of T-F bins in the embedding space, where each pair of dots corresponds to the attractor found for the two speakers in a given mixture.

The objective function of DC is shown in Equation 11, where Y is the indicator function which is equivalent to a binary mask, and V is the learned embedding: $L = {‖ {YY}^{T} - {VV}^{T} ‖}_{2}^{2}$

Since *Y* is orthogonal and constant for each mixture, by multiplying *Y^{T}* and a normalizer *U* = (*Y^{T}T*)⁻¹ to both terms, an objective function can be derived that is a special case of the attractor network, as in Equation 12: $L = {‖ {Y}^{T} - {UY}^{T} {VV}^{T} ‖}_{2}^{2}$

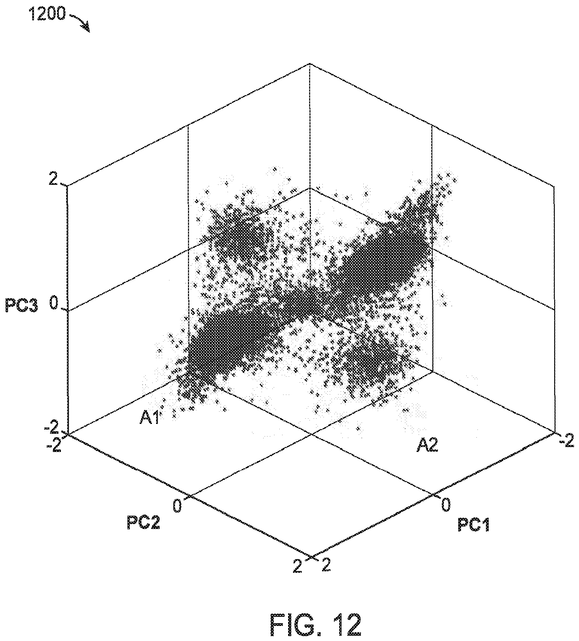

In Equation 12, *UY^{T}V* can be viewed as an averaging operation, where the embeddings are summed according to the label, and the resulted center is multiplied with the embedding matrix *V* to measure the similarity between each embedding and the center, and compared with the ground truth binary mask. When the learned *V* is optimum, i.e., *VV^{T}* = *YY^{T}*, Equations 11 and 12 are equivalent. On the other hand, when the attractor vectors are considered as free parameters in the network, DANet reduces to a classification network, and Equation 7 becomes a fully-connected layer. In this case, PIT may become necessary because the mask has no information about the source and the problem of fixed output dimension arises. In contrast, the freedom of the network to form attractor points during the training allows the system to use the affinity between samples where no constraint is on the number of patterns found, therefore allowing the network to be independent of the number of sources. The flexibility of the network in choosing the attractor points is helpful even in two-source separation problems, because the two sources may have very different structures. As can be seen in FIG. 12, providing a graph 1200 presenting the locations of attractor points in the embedding space, the proposed implementations trained in speaker separation tasks have ended up finding 2 attractor pairs (4 points in the embedding space). More particularly, each point in FIG. 12 corresponds to one of 10,000 mixture sounds, visualized using the first three principal components. Two distinct attractor pairs (denoted as A1 and A2) are visible.

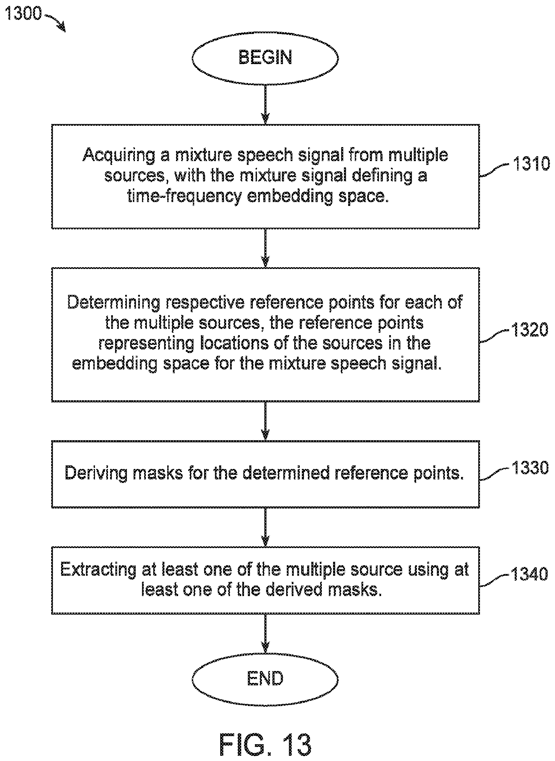

With reference now to FIG. 13, a flowchart of an example deep attractor signal separation procedure 1300 is shown. The procedure 1300 includes acquiring 1310 a mixture speech signal from multiple sources, the mixture signal defining a time-frequency embedding space. As discussed herein, the mixture signal may be the combined sounds signal of the procedure 300, which includes multiple sounds signals from multiple sounds sources. As also notes, the mixture speech signal may be obtained using a single audio sensor, such as a microphone, or multiple audio sensors. Having obtained the mixture speech signal, the procedure 1300 further includes determining 1320 respective reference points for each of the multiple sources, with the reference points representing locations of the sources in the embedding space for the mixture speech signal. The reference points may include attractor points in the embedding space. In some embodiments, determining the respective reference points may include determining the respective reference points using a deep neural network.

At 1330, the procedure 1300 further includes deriving masks for the determined reference points, and extracting 1340 at least one of the multiple sources using at least one of the derived masks. Deriving the masks may include computing similarity between embedded time-frequency points within the embedding space and the determined respective reference points.

As noted, the deep attractor network approach for speech separation may be used in many different applications. For example, the DANet approach may be used to separate multi-speaker speech signals to implement attentional selection processing (i.e., enhance the speech signals of a speaker that the listener is determined to be listening to or focused on). In another example, the DANet approach may also be used in surveillance applications (to separate and record speech from a combined sound signal corresponding to different speakers), for virtual reality applications (reconstruct speaking objects from a pre-recorded source, and render the separated speech signals into a virtual audio, or audio-visual, scene), etc.

The deep attractor network implementations described herein were tested to evaluate their performance and efficacy. To that end, a system was realized for which a 30 hour training set and a 10 hour validation set, generated by randomly selecting utterances from different speakers in the Wall Street Journal (WSJ0) training data set *si_tr_s* was used. The data was mixed with various signal-to-noise ratios (SNR) randomly chosen between 0 dB and 10 dB. A five (5) hour evaluation set was generated similarly as above, using utterances from sixteen (16) unseen speakers from *si_dt_05* and *si_et_05* data in the WSJ0 dataset. Additionally, a three speaker mixture dataset was constructed for a three speaker separation evaluation from the same WSJ set, which had 30 hour training data, 10 hours validation data, and 5 hours testing data, mixed with SNR at -5~ 5 dB. Each three speaker mixture was ensured to include both female and male speakers. All data was re-sampled to 8 kHz to reduce computational and memory costs. The log spectral magnitude was served as an input feature, computed using short-time Fourier transform (STFT) with 32 ms window length, 8 ms hop size, and the square root of hanning window.

The network contained four (4) bi-directional LSTM layers with 600 hidden units in each layer. The embedding dimension was set to 20, resulting in a fully-connected feed-forward layer of 2580 hidden units (20 s 129) after the BLSTM layers. The input features were split into non-overlapping chunks of 100-frame length as the input to the network. An RMSprop procedure was used for training, with an exponential learning rate decaying strategy, where the learning rate started at 10⁻⁴ and ended at 3×10⁻⁶. The total number of epochs was set to be 150, and a cost function was used in Equation 7 on the validation set for early stopping. The criteria for early stopping is no decrease in the loss function on validation set for 10 epochs. A Deep Clustering (DC) network was constructed with the same configuration, which was used as the baseline. The results were reported in terms of signal-to-distortion ratio (SDR, which was defined as scale-invariant SNR here), signal-to-artifacts ratio (SAR), and signal-to-interference ratio (SIR). The results are shown below in Table 1, which provides evaluation metrics for networks with different configurations.

**Table1**

| | GNSDR | GSAR | GSIR |
|---|---|---|---|
| DC | 9.1 | 9.5 | 22.2 |
| DANet | 9.4 | 10.1 | 18.8 |
| DANet-50% | 9.4 | 10.4 | 17.3 |
| DANet-70% | 9.6 | 10.3 | 18.7 |
| DANet-90% | 9.6 | 10.4 | 18.1 |
| DANet-90% (with curriculum training of 400-frame length input) | 10.5 | 11.1 | 20.3 |
| Fix-DANet-90% | 9.5 | 10.4 | 17.8 |

In Table 1 above, the percentage indicated represents the salient weigh threshold used during training. As indicated by the results of Table 1, although the plain DANet already outperforms the DC baseline, adding a simple threshold on T-F samples included in the formation of the attractor yields further improved performance, presumably due to the increased influence of salient segments. On the other hand, the performance boost suggests that better attractor formation procedures can be utilized to estimate the attractors, such as joint optimizing of the network parameters. Moreover, by applying curriculum training strategy, in which the network continues to be trained with 400-frame length input, DANet achieves the best overall performance.

In the last experiment presented in Table 1, a fixed pair of attention vector collected from the training data was used, corresponding to the A1 pair of FIG. 12. This pre-set attractor is able to generalize well to the unseen mixtures and produces high quality separation, but corresponds to slightly worse results than the best model. Compared with K-means, this has the advantage that it can be easily implemented in real-time using a frame-by-frame pipeline. Based on this observation, when more attractors are required (e.g. in more complex tasks), a collection of attractor codebook and a simple classifier could be implemented for real-time processing.

Next, in a three-speaker separation experiment, whose results are shown in Table 2 below, the proposed system significantly outperforms the deep clustering baseline. This result may be expected since deep clustering was trained to estimate binary mask, while the deep attractor network focuses on the signal reconstruction. When the mixture is relatively simple, the binary mask could generate high quality separation. However, for more complex mixtures, or when one source is significantly louder than the other, the binary mask usually leads to large bias to the loudest source, and thus result in unsatisfactory separation for the weaker source. Note that in the three speaker experiment, the network was trained using softmax objective as shown in Equation 10.

**Table 2**

| | GNSDR | GSAR | GSIR |
|---|---|---|---|
| DC | 6.3 | 2.3 | 12.6 |
| DANet | 7.7 | 3.9 | 13.2 |
| DANet (with curriculum training of 400-frame length input) | 8.8 | 5.0 | 15.0 |

Thus, described herein are implementations of a neural network framework referred to as a deep attractor network for general source separation problem. The network forms attractor points in a high-dimensional embedding space of the signal, and the similarity between attractors and time-frequency embeddings are then converted into a soft separation mask. The proposed framework can perform end-to-end, real-time separation, and can work on different number of mixing sources. Evaluations and experimentations performed for the deep attractor network implementations for multi-speaker separation tasks confirmed its efficacy and potential for extension to general source separation problems.

### Other Embodiments

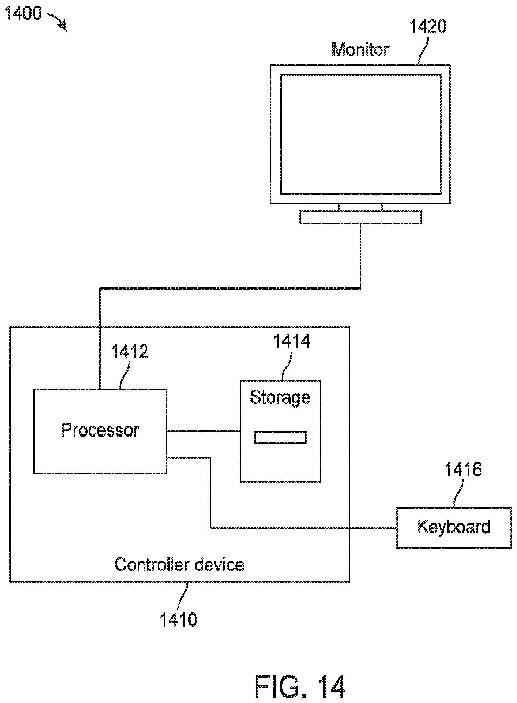

Performing the various procedures, processes, and operations described herein may be facilitated by a controller system (e.g., a processor-based controller system, a state machine, etc.) Particularly, at least some of the various devices/systems (e.g., hearing devices, or other types of hearing augmentation devices) described herein may be implemented, at least in part, using one or more controllers such as the one shown in FIG. 14, illustrating a generic computing or controller system 1400. The computing system 1400 includes a computing-based device 1410 such as a personal computer, a specialized computing device, a controller circuit (implemented on a chip), and so forth, that typically includes a central controller 1412 (which may a programmable processor, such as a CPU). In addition to the central controller 1412, the system includes main memory, cache memory and bus interface circuits (not shown in FIG. 14). The computing / controller-based device 1410 may include a mass storage element 1414, such as a hard drive or flash drive associated with the computer system. The computing / controller system 1400 may further include a keyboard 1416, or keypad, or some other user input interface, and a monitor 1420, e.g., an LCD (liquid crystal display) monitor, that may be placed where a user can access them. The computing system 1400 may be incorporated within a system such as the various devices described herein.

The computing-based device 1410 is configured to facilitate, for example, the implementation of operations for neural decoding of attentional selection in multi-speaker environments and/or for deep attractor networks. The storage device 1414 may thus include a computer program product that when executed on the computing / controller-based device 1410 causes the computing-based device to perform operations to facilitate the implementation of procedures and operations described herein. The computing / controller-based device may further include peripheral devices to enable input/output functionality. Such peripheral devices may include, for example, a CD-ROM drive and/or flash drive (e.g., a removable flash drive), or a network connection (e.g., implemented using a USB port and/or a wireless transceiver), for downloading related content to the connected system. Such peripheral devices may also be used for downloading software containing computer instructions to allow general operation of the respective system/device. Alternatively and/or additionally, in some embodiments, special purpose logic circuitry, e.g., an FPGA (field programmable gate array), an ASIC (application-specific integrated circuit), a DSP processor, etc., may be used in the implementation of the system 1400. Other modules that may be included with the computing-based device 1410 are speakers, a sound card, a pointing device, e.g., a mouse or a trackball, by which the user can provide input to the computing system 1400. The computing / controller-based device 1410 may include an operating system, e.g., Windows XP^{®} Microsoft Corporation operating system, Ubuntu operating system, etc.

Computer programs (also known as programs, software, software applications or code) include machine instructions for a programmable processor, and may be implemented in a high-level procedural and/or object-oriented programming language, and/or in assembly/machine language. As used herein, the term "machine-readable medium" refers to any non-transitory computer program product, apparatus and/or device (e.g., magnetic discs, optical disks, memory, Programmable Logic Devices (PLDs)) used to provide machine instructions and/or data to a programmable processor, including a non-transitory machine-readable medium that receives machine instructions as a machine-readable signal.

In some embodiments, any suitable computer readable media can be used for storing instructions for performing the processes / operations / procedures described herein. For example, in some embodiments computer readable media can be transitory or non-transitory. For example, non-transitory computer readable media can include media such as magnetic media (such as hard disks, floppy disks, etc.), optical media (such as compact discs, digital video discs, Blu-ray discs, etc.), semiconductor media (such as flash memory, electrically programmable read only memory (EPROM), electrically erasable programmable read only Memory (EEPROM), etc.), any suitable media that is not fleeting or not devoid of any semblance of permanence during transmission, and/or any suitable tangible media. As another example, transitory computer readable media can include signals on networks, in wires, conductors, optical fibers, circuits, any suitable media that is fleeting and devoid of any semblance of permanence during transmission, and/or any suitable intangible media.

Unless defined otherwise, all technical and scientific terms used herein have the same meaning as commonly or conventionally understood. As used herein, the articles "a" and "an" refer to one or to more than one (i.e., to at least one) of the grammatical object of the article. By way of example, "an element" means one element or more than one element. "About" and/or "approximately" as used herein when referring to a measurable value such as an amount, a temporal duration, and the like, encompasses variations of ±20% or ±10%, ±5%, or ±0.1% from the specified value, as such variations are appropriate in the context of the systems, devices, circuits, methods, and other implementations described herein. "Substantially" as used herein when referring to a measurable value such as an amount, a temporal duration, a physical attribute (such as frequency), and the like, also encompasses variations of ±20% or ±10%, ±5%, or +0.1% from the specified value, as such variations are appropriate in the context of the systems, devices, circuits, methods, and other implementations described herein.

As used herein, including in the claims, "or" as used in a list of items prefaced by "at least one of" or "one or more of" indicates a disjunctive list such that, for example, a list of "at least one of A, B, or C" means A or B or C or AB or AC or BC or ABC (i.e., A and B and C), or combinations with more than one feature (e.g., AA, AAB, ABBC, etc.). Also, as used herein, unless otherwise stated, a statement that a function or operation is "based on" an item or condition means that the function or operation is based on the stated item or condition and may be based on one or more items and/or conditions in addition to the stated item or condition.

Although particular embodiments have been disclosed herein in detail, this has been done by way of example for purposes of illustration only, and is not intended to be limiting with respect to the scope of the appended claims, which follow. The claims presented are representative of at least some of the embodiments and features disclosed herein. Other unclaimed embodiments and features are also contemplated.

## Claims

1. A method (300) comprising:
obtaining (310), by a device (110), a combined sound signal (102) for signals combined from multiple sound sources (SP1-N, Spk1, Spk2) in an area in which a person (104) is located;
applying (320), by the device, neural-network-based speech-separation processing to the combined sound signal from the multiple sound sources to derive a plurality of separated signals (122a-n) that each contains signals corresponding to different groups of the multiple sound sources;
obtaining (330), by the device, neural signals (106) for the person, the neural signals being indicative of one or more of the multiple sound sources the person is attentive to;
selecting (340) one of the plurality of separated signals based on the obtained neural signals for the person; and
processing (350) the selected one of the plurality of separated derived signals, **characterized in that** applying the speech-separation processing comprises separating (220) a sound spectrogram representation of the combined signal into multiple resultant speaker spectrograms by feeding the sound spectrogram representation of the combined signal into multiple deep neural networks, DNNs, each of which is trained to separate the sound spectrogram representation into a specific speaker spectrogram for a specific speaker from the multiple speakers, to obtain the multiple speaker spectrograms,
and **in that** selecting the one of the plurality of separated signals comprises comparing (230), using normalized correlation analysis, a spectrogram of a particular speaker the person is attentive to, reconstructed from the obtained neural signals, to the multiple resultant speaker spectrograms obtained from the multiple DNNs to select one of the multiple resultant speaker spectrograms,
and further **in that** processing the selected one of the plurality of separated derived signals comprises:
converting (240) the selected one of the multiple resultant speaker spectrograms into a resultant acoustic waveform;
performing (250) one or more of: amplifying the selected one of the plurality of separated signals, or attenuating at least one non-selected signal from the plurality of separated signals; and
adding the selected one of the plurality of separated signals to the combined signal.

2. The method of claim 1, further comprising:
generating the sound spectrogram representation from the combined sound signal.

3. The method of claim 1 or claim 2, wherein obtaining the neural signals for the person comprises:
obtaining one or more of: electrocorticography, ECoG, signals for the person, noninvasive neural recordings, or in-ear EEG recordings.

4. The method of any preceding claim, wherein obtaining the combined sound signal for the multiple sound sources comprises:
receiving the combined sound signal for the multiple sound sources at a single microphone (110) coupled to the device.

5. A system (100, 200) comprising:
at least one microphone (110) to obtain (310) a combined sound signal (102) for signals combined from multiple sound sources (SP1-N, Spk1, Spk2) in an area in which a person (104) is located;
one or more neural sensors to obtain (330) neural signals (106) for the person, the neural signals being indicative of one or more of the multiple sound sources the person is attentive to; and
a controller (1410) coupled to the at least one microphone and the one or more neural sensors, the controller configured to:
apply (320) neural-network-based speech-separation processing to the combined sound signal from the multiple sound sources to derive a plurality of separated signals (122a-n) that each contains signals corresponding to different groups of the multiple sound sources;
select (340) one of the plurality of separated signals based on the obtained neural signals for the person; and
process (350) the selected one of the plurality of separated derived signals, **characterized in that** the controller configured to apply the speech-separation processing is configured to:
separate (220) a sound spectrogram representation of the combined signal into multiple resultant speaker spectrograms by feeding the sound spectrogram representation of the combined signal into multiple deep neural networks, DNNs, each of which is trained to separate the sound spectrogram representation into a specific speaker spectrogram for a specific speaker from multiple speakers, to obtain the multiple speaker spectrograms; and
compare (230), using normalized correlation analysis, a spectrogram of a particular speaker the person is attentive to, reconstructed from the obtained neural signals, to the multiple resultant speaker spectrograms obtained from the multiple DNNs, to select one of the multiple resultant speaker spectrograms; and
process the selected one of the plurality of separated derived signals by:
converting the selected one of the multiple resultant speaker spectrograms into a resultant acoustic waveform;
performing one or more of: amplifying the selected one of the plurality of separated signals; and attenuating at least one non-selected signal from the plurality of separated signals; and
adding the selected one of the plurality of separated signals to the combined signal.

6. The system of claim 5, wherein the controller is further configured to:
generate the sound spectrogram representation from the combined sound signal.

7. The system of claim 5 or claim 6, wherein the one or more neural sensors to obtain the neural signals for the person comprise one or more of: an electrocorticography, ECoG, sensor to measure ECoG signals for the person, a noninvasive scalp to obtain neural measurements, or an in-ear EEG sensor to obtain in-ear EEG recordings.

8. The system of any of claims 5 to 7, wherein the at least one microphone is a single microphone (110) coupled to the controller.

9. A computer readable media having instructions stored thereon, which when executed by one or more processors (1412) of a data processing system (1400), cause the data processing system to perform the method as claimed in any of claims 1 to 4.

## Patentansprüche

1. Verfahren (300), umfassend:
Erhalten (310), durch eine Vorrichtung (110), eines kombinierten Schallsignals (102) für Signale, die von mehreren Schallquellen (SP1-N, Spk1, Spk2) in einem Bereich, in dem sich eine Person (104) befindet, kombiniert werden,
Anwenden (320), durch die Vorrichtung, einer auf einem neuronalen Netzwerk basierenden Sprachtrennungsverarbeitung auf das kombinierte Schallsignal von den mehreren Schallquellen, um eine Vielzahl von getrennten Signalen (122a-n) abzuleiten, die jeweils Signale enthalten, die verschiedenen Gruppen der mehreren Schallquellen entsprechen;
Erhalten (330), durch die Vorrichtung, von neuronalen Signalen (106) für die Person, wobei die neuronalen Signale eine oder mehrere der mehreren Schallquellen anzeigen, auf die die Person achtet;
Auswählen (340) eines der Vielzahl von getrennten Signalen auf der Grundlage der erhaltenen neuronalen Signale für die Person; und
Verarbeiten (350) des ausgewählten der Vielzahl von getrennten abgeleiteten Signalen, **dadurch gekennzeichnet, dass** das Anwenden der Sprachtrennungsverarbeitung das Trennen (220) einer Schallspektrogramm-Darstellung des kombinierten Signals in mehrere resultierende Sprecherspektrogramme umfasst, indem die Schallspektrogramm-Darstellung des kombinierten Signals in mehrere tiefe neuronale Netzwerke, DNNs, eingespeist wird, von denen jedes trainiert ist, die Schallspektrogramm-Darstellung in ein spezifisches Sprecherspektrogramm für einen spezifischen Sprecher aus den mehreren Sprechern zu trennen, um die mehreren Sprecherspektrogramme zu erhalten,
und dadurch, dass das Auswählen des einen der Vielzahl von getrennten Signalen das Vergleichen (230), unter Verwendung einer normierten Korrelationsanalyse, eines Spektrogramms eines bestimmten Sprechers, auf den die Person achtet, das aus den erhaltenen neuronalen Signalen rekonstruiert wurde, mit den mehreren resultierenden Sprecherspektrogrammen, die von den mehreren DNNs erhalten wurden, umfasst, um eines der mehreren resultierenden Sprecherspektrogramme auszuwählen,
und ferner dadurch, dass das Verarbeiten des ausgewählten der Vielzahl von getrennten abgeleiteten Signalen umfasst:
Umwandlung (240) des ausgewählten einen der mehreren resultierenden Sprecherspektrogramme in eine resultierende akustische Wellenform;
Durchführen (250) von einem oder mehreren aus: Verstärken des ausgewählten aus der Vielzahl von getrennten Signalen oder Dämpfen mindestens eines nicht ausgewählten Signals aus der Vielzahl von getrennten Signalen; und
Addieren des ausgewählten aus der Vielzahl von getrennten Signalen zu dem kombinierten Signal.

2. Verfahren nach Anspruch 1, ferner umfassend:
Erzeugen der Schallspektrogramm-Darstellung aus dem kombinierten Schallsignal.

3. Verfahren nach Anspruch 1 oder Anspruch 2, wobei das Erhalten der neuronalen Signale für die Person umfasst:
Erhalten eines oder mehrerer aus: Elektrokortikographie-, ECoG, -Signale für die Person, nichtinvasive neurale Aufzeichnungen oder In-Ohr-EEG-Aufzeichnungen.

4. Verfahren nach einem der vorhergehenden Ansprüche, wobei das Erhalten des kombinierten Schallsignals für die mehreren Schallquellen umfasst:
Empfangen des kombinierten Schallsignals für die mehreren Schallquellen an einem einzelnen Mikrofon (110), das mit der Vorrichtung gekoppelt ist.

5. System (100, 200), umfassend.
mindestens ein Mikrofon (110), um ein kombiniertes Schallsignal (102) für Signale zu erhalten (310), die von mehreren Schallquellen (SP1-N, Spk1, Spk2) in einem Bereich kombiniert werden, in dem sich eine Person (104) befindet;
einen oder mehrere neuronale Sensoren, um neuronale Signale (106) für die Person zu erhalten (330), wobei die neuronalen Signale eine oder mehrere der mehreren Schallquellen anzeigen, auf die die Person achtet; und
eine Steuerung (1410), die mit dem mindestens einen Mikrofon und dem einen oder den mehreren neuronalen Sensoren verbunden ist, wobei die Steuerung konfiguriert ist zum:
Anwenden (320) einer auf einem neuronalen Netzwerk basierenden Sprachtrennungsverarbeitung auf das kombinierte Schallsignal von den mehreren Schallquellen, um eine Vielzahl von getrennten Signalen (122a-n) abzuleiten, die jeweils Signale enthalten, die verschiedenen Gruppen der mehreren Schallquellen entsprechen;
Auswählen (340) eines aus der Vielzahl von getrennten Signalen auf der Grundlage der erhaltenen neuronalen Signale für die Person; und
Verarbeiten (350) des ausgewählten der Vielzahl von getrennten abgeleiteten Signalen, **dadurch gekennzeichnet, dass** die Steuerung, die konfiguriert ist, um die Sprachtrennungsverarbeitung anzuwenden, konfiguriert ist zum:
Trennen (220) einer Schallspektrogramm-Darstellung des kombinierten Signals in mehrere resultierende Sprecherspektrogramme durch Einspeisen der Schallspektrogramm-Darstellung des kombinierten Signals in mehrere tiefe neuronale Netzwerke, DNNs, von denen jedes trainiert ist, die Schallspektrogramm-Darstellung in ein spezifisches Sprecherspektrogramm für einen spezifischen Sprecher aus mehreren Sprechern zu trennen, um die mehreren Sprecherspektrogramme zu erhalten; und
Vergleichen (230), unter Verwendung einer normierten Korrelationsanalyse, eines Spektrogramms eines bestimmten Sprechers, auf den die Person achtet, das aus den erhaltenen neuronalen Signalen rekonstruiert wurde, mit den mehreren resultierenden Sprecherspektrogrammen, die von den mehreren DNNs erhalten wurden, um eines der mehreren resultierenden Sprecherspektrogramme auszuwählen; und
Verarbeiten des ausgewählten der Vielzahl von getrennten abgeleiteten Signalen durch:
Umwandeln des ausgewählten der mehreren resultierenden Sprecherspektrogramme in eine resultierende akustische Wellenform;
Durchführen eines oder mehrerer aus: Verstärken des ausgewählten der Vielzahl von getrennten Signalen; und Dämpfen mindestens eines nicht ausgewählten Signals aus der Vielzahl von getrennten Signalen; und
Addieren des ausgewählten einen der Vielzahl von getrennten Signalen zu dem kombinierten Signal.

6. System nach Anspruch 5, wobei die Steuerung ferner konfiguriert ist zum:
Erzeugen der Schallspektrogramm-Darstellung aus dem kombinierten Schallsignal.

7. System nach Anspruch 5 oder Anspruch 6, wobei der eine oder die mehreren neuronalen Sensoren zum Erhalten der neuronalen Signale für die Person eines oder mehrere aus Folgendem umfassen: einen Elektrokortikographie-, ECoG, -Sensor, um ECoG-Signale für die Person zu messen, eine nicht-invasive Kopfhaut, um neurale Messungen zu erhalten, oder einen In-Ohr-EEG-Sensor, um In-Ohr-EEG-Aufzeichnungen zu erhalten.

8. System nach einem der Ansprüche 5 bis 7, wobei das mindestens eine Mikrofon ein einzelnes Mikrofon (110) ist, das mit der Steuerung verbunden ist.

9. Computerlesbares Medium, das darauf gespeicherte Anweisungen aufweist, die, wenn sie von einem oder mehreren Prozessoren (1412) eines Datenverarbeitungssystems (1400) ausgeführt werden, das Datenverarbeitungssystem veranlassen, das Verfahren, wie in einem der Ansprüche 1 bis 4 beansprucht, durchzuführen.

## Revendications

1. Procédé (300) comprenant :
l'obtention (310), par un dispositif (110), d'un signal sonore combiné (102) pour des signaux combinés provenant de multiples sources sonores (SP1-N, Spk1, Spk2) dans une zone dans laquelle se trouve une personne (104) ;
l'application (320), par le dispositif, d'un traitement de séparation de la parole basé sur un réseau neuronal au signal sonore combiné provenant des multiples sources sonores pour dériver une pluralité de signaux séparés (122a-n) qui contiennent chacun des signaux correspondant à différents groupes des multiples sources sonores ;
l'obtention (330), par le dispositif, de signaux neuronaux (106) pour la personne, les signaux neuronaux étant indicatifs d'une ou plusieurs des multiples sources sonores auxquelles la personne est attentive ;
la sélection (340) de l'un de la pluralité de signaux séparés sur la base des signaux neuronaux obtenus pour la personne ; et
le traitement (350) de celui sélectionné de la pluralité de signaux dérivés séparés, **caractérisé en ce que** l'application du traitement de séparation de la parole comprend la séparation (220) d'une représentation de spectrogramme sonore du signal combiné en de multiples spectrogrammes de locuteur résultants en amenant la représentation de spectrogramme sonore du signal combiné dans de multiples réseaux de neurones profonds, DNN, dont chacun est formé pour séparer la représentation de spectrogramme sonore en un spectrogramme de locuteur spécifique pour un locuteur spécifique à partir des multiples locuteurs, pour obtenir les spectrogrammes de locuteurs multiples,
et **en ce que** la sélection de l'un de la pluralité de signaux séparés comprend la comparaison (230), à l'aide d'une analyse de corrélation normalisée, d'un spectrogramme d'un locuteur particulier auquel la personne est attentive, reconstruit à partir des signaux neuronaux obtenus, aux multiples spectrogrammes de locuteur résultants obtenus à partir des multiples DNN pour sélectionner l'un des multiples spectrogrammes de locuteurs résultants,
et en outre **en ce que** le traitement de celui sélectionné de la pluralité de signaux dérivés séparés comprend :
la conversion (240) de celui sélectionné des multiples spectrogrammes de locuteur résultants en une forme d'onde acoustique résultante ;
la réalisation (250) d'un ou plusieurs de : l'amplification de celui sélectionné de la pluralité de signaux séparés, ou l'atténuation d'au moins un signal non sélectionné parmi la pluralité de signaux séparés ; et
l'ajout de celui sélectionné de la pluralité de signaux séparés au signal combiné.

2. Procédé selon la revendication 1, comprenant
en outre :
la génération de la représentation de spectrogramme sonore à partir du signal sonore combiné.

3. Procédé selon la revendication 1 ou la revendication 2, dans lequel l'obtention des signaux neuronaux pour la personne comprend :
l'obtention d'un ou plusieurs de : des signaux d'électrocorticographie, ECoG, pour la personne, des enregistrements neuronaux non invasifs ou des enregistrements EEG intra-auriculaires.

4. Procédé selon l'une quelconque des revendications précédentes, dans lequel l'obtention du signal sonore combiné pour les multiples sources sonores comprend :
la réception du signal sonore combiné pour les multiples sources sonores au niveau d'un seul microphone (110) couplé au dispositif.

5. Système (100, 200) comprenant :
au moins un microphone (110) pour obtenir (310) un signal sonore combiné (102) pour des signaux combinés provenant de multiples sources sonores (SP1-N, Spk1, Spk2) dans une zone dans laquelle se trouve une personne (104) ;
un ou plusieurs capteurs neuronaux pour obtenir (330) des signaux neuronaux (106) pour la personne, les signaux neuronaux étant indicatifs d'une ou plusieurs des multiples sources sonores auxquelles la personne est attentive ; et
un contrôleur (1410) couplé à l'au moins un microphone et au ou aux capteurs neuronaux, le contrôleur étant configuré pour :
appliquer (320) un traitement de séparation de la parole basé sur un réseau neuronal au signal sonore combiné provenant des multiples sources sonores pour dériver une pluralité de signaux séparés (122a-n) qui contiennent chacun des signaux correspondant à différents groupes des multiples sources sonores ;
sélectionner (340) l'un de la pluralité de signaux séparés sur la base des signaux neuronaux obtenus pour la personne ; et
traiter (350) celui sélectionné de la pluralité de signaux dérivés séparés, **caractérisé en ce que** le contrôleur configuré pour appliquer le traitement de séparation de la parole est configuré pour :
séparer (220) une représentation de spectrogramme sonore du signal combiné en de multiples spectrogrammes de locuteur résultants par amenée de la représentation de spectrogramme sonore du signal combiné dans de multiples réseaux neuronaux profonds, DNN,
dont chacun est formé pour séparer la représentation de spectrogramme sonore en un spectrogramme de locuteur spécifique pour un locuteur spécifique à partir de multiples locuteurs, pour obtenir les spectrogrammes de locuteurs multiples ; et
comparer (230), à l'aide d'une analyse de corrélation normalisée, un spectrogramme d'un locuteur particulier auquel la personne est attentive, reconstruit à partir des signaux neuronaux obtenus, aux multiples spectrogrammes de locuteur résultants obtenus à partir des multiples DNN, pour sélectionner l'un des multiples spectrogrammes de locuteur résultants ; et
traiter celui sélectionné de la pluralité de signaux dérivés séparés par :
conversion de celui sélectionné des multiples spectrogrammes de locuteur résultants en une forme d'onde acoustique résultante ;
réalisation d'un ou plusieurs de : l'amplification de celui sélectionné de la pluralité de signaux séparés ; et l'atténuation d'au moins un signal non sélectionné parmi la pluralité de signaux séparés ; et
l'ajout de celui sélectionné de la pluralité de signaux séparés au signal combiné.

6. Système selon la revendication 5, dans lequel le contrôleur est en outre configuré pour :
générer la représentation de spectrogramme sonore à partir du signal sonore combiné.

7. Système selon la revendication 5 ou la revendication 6, dans lequel le ou les capteurs neuronaux pour obtenir les signaux neuronaux pour la personne comprennent un ou plusieurs de : un capteur d'électrocorticographie, ECoG, pour mesurer les signaux ECoG pour la personne, un cuir chevelu non invasif pour obtenir des mesures neuronales, ou un capteur EEG intra-auriculaire pour obtenir des enregistrements EEG intra-auriculaires.

8. Système selon l'une quelconque des revendications 5 à 7, dans lequel l'au moins un microphone est un microphone unique (110) couplé au contrôleur.

9. Support lisible par ordinateur sur lequel sont stockées des instructions qui, lorsqu'elles sont exécutées par un ou plusieurs processeurs (1412) d'un système de traitement de données (1400), amènent le système de traitement de données à mettre en œuvre le procédé selon l'une quelconque des revendications 1 à 4.
